(19) Europäisches Patentamt
European Patent Office
Office européen des brevets

(11) **EP 4 211 519 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21769379.5**

(22) Anmeldetag: **24.08.2021**

(51) Internationale Patentklassifikation (IPC):
**G05B 19/418** (2006.01)    **H05K 13/08** (2006.01)

(52) Gemeinsame Patentklassifikation (CPC):
**G05B 19/4187;** G05B 19/41805; G05B 19/4189;
G05B 2219/31381; G05B 2219/31383;
G05B 2219/32079; G05B 2219/32304;
G05B 2219/32418; G05B 2219/45029; Y02P 90/02

(86) Internationale Anmeldenummer:
**PCT/EP2021/073376**

(87) Internationale Veröffentlichungsnummer:
**WO 2022/048950 (10.03.2022 Gazette 2022/10)**

(54) **VORRICHTUNGEN UND VERFAHREN ZUM BETREIBEN VON MINDESTENS ZWEI WERKZEUGEN**

DEVICES AND METHODS FOR OPERATING AT LEAST TWO TOOLS

DISPOSITIFS ET PROCÉDÉS POUR FAIRE FONCTIONNER AU MOINS DEUX OUTILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2020 DE 102020005484**

(43) Veröffentlichungstag der Anmeldung:
**19.07.2023 Patentblatt 2023/29**

(73) Patentinhaber: **Muehlbauer GmbH & Co. KG 93426 Roding (DE)**

(72) Erfinder: **FREIMUTH, Marcel 94256 Drachselsried (DE)**

(74) Vertreter: **Schmidt, Steffen J. Wuesthoff & Wuesthoff Patentanwälte und Rechtsanwalt PartG mbB Schweigerstrasse 2 81541 München (DE)**

(56) Entgegenhaltungen:
**WO-A1-2009/093446    DE-A1- 102009 042 651 JP-A- 2011 171 536**

**Beschreibung**

Hintergrund

Hier werden Vorrichtungen zum Betreiben von mindestens zwei Werkzeugen vorgestellt. Die mindestens zwei Werkzeuge werden in einem ersten und mindestens einem zweiten Bearbeitungsbereich der Vorrichtung betrieben. Zugehörige Verfahren werden ebenfalls vorgestellt.

Stand der Technik

Beim Übertragen von elektronischen Bauteilen, insbesondere Chips (engl.: "dies") und insbesondere beim Übertragen von vereinzelten elektronischen Bauteilen besteht allgemein das Problem, dass diese leicht beschädigt werden können und daher mit großer Sorgfalt behandelt werden müssen. Zudem sind elektronische Bauteile einer kontinuierlichen Miniaturisierung unterworfen, so dass die Anforderungen hinsichtlich der Genauigkeit beim Übertragen der elektronischen Bauteile kontinuierlich steigen. Überdies steigt die Anforderung an die Anzahl der pro Zeiteinheit übertragenen (elektronischen) Bauteile (Durchsatz).

In DE 103 49 847 B3 wird eine Positioniervorrichtung und ein Positionierverfahren für die Übertragung elektronischer Bauteile beschrieben. Dabei ist ein auf einer Trägerfolie angeordneter Halbleiter-Wafer oberhalb und parallel zu einem bandartigen Substrat angeordnet. Der Wafer kann mittels einer Waferhalterung innerhalb der Waferebene verschoben und zusätzlich um eine senkrecht zu der Waferebene stehende Rotationsachse gedreht werden. Eine Ausstoßeinrichtung umfasst eine Ausstechnadel, die mittels einer Bewegung nach unten auf die Rückseite eines abzulösenden Chips wirkt und diesen von der Trägerfolie ablöst. Der von der Trägerfolie abgelöste Chip wird dadurch auf eine Bondposition auf dem bandartigen Substrat abgelegt.

Die WO2017/076989 A1 betrifft ein Verarbeitungssystem und Verfahren zur Verarbeitung eines flexiblen Substrats, zum Beispiel einer Spur unter Verwendung eines Spanners mit einer entlang einer Transportrichtung des flexiblen Substrats bewegbaren Vakuumplatte mit einem Indexierer, der das flexible Substrat intermittierend zur Verarbeitung bewegt. Die Vakuumplatte ist konfiguriert, um entlang der Transportrichtung bewegt zu werden. Ein Indexierer ist konfiguriert, um intermittierend das flexible Substrat zur Verarbeitung zu bewegen. Eine Steuerung ist konfiguriert, den Spanner und den Indexierer so zu steuern, dass eine Relativgeschwindigkeit zwischen dem Indexierer und die Unterdruckplatte des Spanners unter allen Arbeitsbedingungen oberhalb einer vorgegebenen Schwelle gehalten wird, auch wenn das flexible Substrat angehalten wird. Die Spur, die in dem Verarbeitungssystem verwendet werden kann, weist eine Anzahl von elektrischen Strukturen auf, die durch einen Abstand voneinander getrennt sind. Bei diesen elektrischen Strukturen kann es sich um jede Art von flexibler Elektronik handeln.

Die DE 10 2011 104 225 B4 betrifft eine Vorrichtung zum Positionieren zu übertragender elektronischer Bauteile relativ zu einer Ausstoßeinrichtung, mit der Ausstoßeinrichtung, die einen Schieber für zumindest ein elektronisches Bauteil und ein den Schieber umgebendes Gehäuse aufweist, wobei das Gehäuse einen ersten lichtdurchlässigen Bereich aufweist. Ein erster Träger stellt die zu übertragenden elektronischen Bauteile bereit. Der erste Träger hat eine der Ausstoßeinrichtung zugewandte erste Seite und eine von der Ausstoßeinrichtung abgewandte zweite Seite. Auf der zweiten Seite ist eine Vielzahl der elektronischen Bauteile vorgesehen. Eine Bilddatenerfassungseinrichtung ist dazu eingerichtet, durch den ersten lichtdurchlässigen Bereich des Gehäuses hindurch Bilddaten einer Region zu erfassen, in der der Schieber mit dem wenigstens einen elektronischen Bauteil zu interagieren eingerichtet ist. Eine Steuerung ist dazu eingerichtet, aus den erfassten Bilddaten Positionsdaten des zu übertragenden elektronischen Bauteils zu ermitteln sowie aufgrund der Positionsdaten Steuerbefehle zu erzeugen. Zumindest ein Aktor ist dazu eingerichtet, den ersten Träger und die Ausstoßeinrichtung aufgrund der Steuerbefehle relativ zueinander zu bewegen, um einen Versatz zwischen einer Längsachse des Schiebers und einer Mittelachse des zu übertragenden elektronischen Bauteils zu verändern, wobei die Ausstoßeinrichtung einen im Inneren des Gehäuses angeordneten ersten Spiegel umfasst.

Die JP 2003-109979 A betrifft eine Vorrichtung mit zumindest zwei Schiebern zum Heraustrennen von Bauteilen aus einem ersten Träger. Dabei werden die Bauteile jeweils von einer Saug-Pipette eines Übertragungselements aufgenommen. In einem letzten Schritt wird das Übertragungselement samt Saug-Pipetten und Bauteilen über einen zweiten Träger positioniert, welcher bereits mit Haftmittel präpariert wurde, und die Bauteile auf den zweiten Träger abgelegt. Dabei werden die Bauteile nicht direkt vom ersten Träger zum zweiten Träger übertragen, sondern nach der Abtrennung vom ersten Träger mittels eines Übertragungselements aufgenommen, und in einem Folgeschritt durch das Übertragungselement genau orientiert und auf den zweiten Träger befestigt.

Weitere Vorrichtungen und Verfahren zum Übertragen von elektronischen Bauteilen, die technologischen Hintergrund zur hier beschrieben Vorrichtung und zum hier beschriebenen Verfahren bilden, werden in JP 5267451 A, EP 0 565 781 B1 und DE 198 22 512 A1, US 4,667,402 B1, US 2008/0086874 A1, EP 2 764 826 A1, US 2002/0019074 A1, US 2009/ 242124 A1, EP 0 140 126 A1, US 4,990,051 B1, DE 198 22 512 A1, US 2006/237142 A1, US 2007/293022 A1, US 6,201,306 B1, JP 2009-238881 A, JP 2010-161155 A, US 4,667,402 B1, JP 60-097634 A, JP 01-109737 A, JP 55-070041 A, JP 2002-050670 A, JP 09-162204 A, JP 53-100765 A, JP 2003-109979 A, JP 2008-004936 A, WO 2007/137888 A1, WO 2000/014789 A1, EP 949 662 A2, US 2006/013680 A1, US 2016/308269 A1, DE 10 2011 017218 A1, EP 2 491 583 B1 beschrieben.

Um den Durchsatz der Vorrichtung zu erhöhen, wird zum Beispiel der Ansatz verfolgt, ein endloses Band mit mehreren nebeneinander angeordneten Spuren mit Bauteilen durch mehrere hintereinander angeordnete Übertragungseinrichtungen in einer Montagelinie zu fördern. In jeder Übertragungseinrichtung befindet sich ein Werkzeug, zum Beispiel in Gestalt eines Prebonders, der jeweils weitere Bauteile mit den jeweiligen ersten Bauteilen verbaut. Dies erhöht den Durchsatz der gesamten Montagelinie. Jedes Werkzeug in der Linie arbeitet auf einem Teilbereich eines mehrreihigen Bandmaterials, zum Beispiel bearbeitet ein Werkzeug die Reihen 1 und 2 auf einem Material mit 8 Reihen.

Diese Art der Verarbeitung führt jedoch zu einem ungünstigen Effekt. Da alle Übertragungseinrichtungen / Werkzeuge in der Montagelinie in Förderrichtung des Bandmaterials oder der Bauteilbahn nacheinander angeordnet sind und die Pufferkapazität zwischen den Übertragungseinrichtungen begrenzt ist, kann es abhängig von den Verarbeitungszeiten der einzelnen Werkzeuge zu Verzögerungen kommen. Zusätzlich müssen sich alle Übertragungseinrichtungen in der Montagelinie an die Vorschubgeschwindigkeit oder die Verarbeitungszeit des langsamsten Werkzeugs anpassen.

Dies bedeutet, dass die Anzahl der Reihen oder Spuren großen Einfluss auf den Durchsatz der Montagelinie hat. Solange ein Werkzeug nur vollständige Reihen be-/verarbeitet, z.B. in einer Montagelinie mit vier Werkzeugen und einem Bandmaterial mit fünf Bauteilreihen, muss eines der Werkzeuge zwei Reihen und die restlichen drei Werkzeuge je eine Reihe verarbeiten. Das Werkzeug, welches zwei Reihen bearbeitet, bestimmt die insgesamte Fördergeschwindigkeit des Bandmaterials. Daher können die drei Werkzeuge der anderen Reihen jeweils nur ein Bauteil verarbeiten (und einige Zeit warten), während das Werkzeug, das Bauteile in zwei Reihen verarbeitet, durchgehend beschäftigt ist. Infolgedessen können die drei Werkzeuge mit nur einer zugewiesenen Reihe nicht ihr volles Durchsatzpotenzial nutzen. Im Vergleich zu einer gleichen Montagelinie mit einem Bandmaterial mit 4 Reihen kann der Durchsatz um bis zu 50% sinken.

Problem

Dieses Problem betrifft Montagelinien mit mindestens zwei miteinander gekoppelten Werkzeugen. Ziel ist es daher, eine Vorrichtung bereitzustellen, die einen höheren Montagedurchsatz in einer Montagelinie ermöglicht, in der einem Werkzeug mehr als eine Reihe von zu bearbeitenden Bauteilen zugeordnet ist.

Lösung

Hierzu wird hier eine Vorrichtung mit den Merkmalen des Anspruchs 1 vorgeschlagen. Diese eine Vorrichtung dient zum Betrieb von mindestens zwei Werkzeugen in einem ersten und mindestens einem zweiten Bearbeitungsbereich, in jedem Bearbeitungsbereich ist dem jeweiligen Werkzeug eine Anzahl von Bearbeitungsstellen zugeordnet, durch die erste Bauteile, die von einer Bauteilbahn getragen werden, entlang einer Spur durch den ersten und mindestens den zweiten Bearbeitungsbereich gefördert werden. Darüber hinaus ist die Gesamtzahl der Werkzeuge in der Vorrichtung geringer als die Anzahl der Bearbeitungsstellen in jedem Bearbeitungsbereich. Zusätzlich umfasst die Spur eine Anzahl von Teilspuren, die der Anzahl der Bearbeitungsstellen entspricht. Darüber hinaus kann zum Beispiel das Werkzeug jedes Bearbeitungsbereichs so konfiguriert sein, dass es an jeder zugeordneten Bearbeitungsstelle in seinem Bearbeitungsbereich jeweils zweite Bauteile an jeweils erste Bauteile montiert.

Die Vorrichtung umfasst eine Steuereinheit, die so konfiguriert ist, dass sie in Abhängigkeit von einer Förderbewegung der Bauteilbahn entlang der Spur das Werkzeug an einer oder mehreren der Bearbeitungsstellen in ihrem Bearbeitungsbereich positioniert. Die Steuereinheit ist ferner so konfiguriert, dass sie das Werkzeug zum Beispiel zum Montieren eines ersten oder zweiten Bauteils an der jeweiligen Bearbeitungsstelle betreibt.

Die Steuereinheit ist ferner so konfiguriert, dass in dem ersten Bereich ausgewählte ersten Bauteile, die auf der Bauteilbahn entlang einer ersten Teilspur befördert werden, und ausgewählte erste Bauteile, die auf der Bauteilbahn entlang einer zweiten Teilspur befördert werden, durch das Werkzeug des ersten Bereichs bearbeitet werden. Die Steuereinheit ist ferner so konfiguriert, dass im zweiten Bereich ausgewählte ersten Bauteile, die auf der Bauteilbahn entlang einer dritten Teilspur befördert werden, und die ersten Bauteile, die auf der Bauteilbahn entlang der zweiten Teilspur befördert und im ersten Bereich nicht bearbeitet werden, durch das Werkzeug des zweiten Bereichs bearbeitet werden.

Die Vorrichtung hat in einer Variante zum Beispiel zwei Quellen zweiter Bauteile (jeweils in Gestalt eines Wafers), von denen zweite Bauteile auf die mehreren, zum Beispiel drei Reihen ersten Bauteile übertragen werden. Von jeder der Quellen (Wafer) werden zweite Bauteile auf zwei Reihen erster Bauteile übertragen, aber nicht auf mehr als zwei (Zum Beispiel drei), obwohl die jeweilige Quelle in der Vorrichtung auch zu mehr als zwei (zum Beispiel bis zur dritten) Reihe(n) erster Bauteile positionierbar wäre.

In einigen Varianten sind die ausgewählten ersten Bauteile alle Bauteile in der Teilspur. Dadurch können die Werkzeuge auf eine Weise arbeiten, die für die Bauteilbahn, auf der die Werkzeuge arbeiten, am effizientesten ist.

Die Vorrichtung kann zu einer Erhöhung der Kapazitätsauslastung der einzelnen Werkzeuge führen, indem sie die gemeinsame Nutzung von Teilspuren ermöglicht. Dies kann dazu führen, dass Werkzeuge einzelne Reihen nicht mehr vollständig, sondern nur noch teilweise bearbeiten. Ein nachfolgendes Werkzeug kann dann die noch unbearbeiteten Bearbeitungsstellen in der Reihe bearbeiten, so dass die Reihe schliesslich vollständig bearbeitet ist (zum Beispiel an einem ersten Beuteil der Reihe ein zweites Bauteil montiert ist).

Dies kann dazu führen, dass die Vorrichtung den höchsten Durchsatz der Montagelinie ermöglicht. Hierbei teilen sich zwei Werkzeuge eine Teilspur, wobei die zweite Teilspur sowohl an die erste Teilspur als auch an die dritte Teilspur angrenzt. Dies kann einen höheren Durchsatz der Montagelinie ermöglichen, da die Werkzeuge nicht zwei Teilspuren überqueren müssen, um eine gemeinsame Teilspur zu bearbeiten.

In einigen Beispielen wird die Bauteilbahn, die entlang der Spur durch den ersten und mindestens den zweiten Bearbeitungsbereich befördert wird, durch eine Transportfunktion intermittierend oder kontinuierlich befördert. Dadurch kann die Bauteilbahn unter den mindestens zwei Werkzeugen angehalten werden, um sicherzustellen, dass die Bearbeitung genauer ist, da die Werkzeuge nicht mit einer sich ständig bewegenden Spur arbeiten müssen. Es kann auch eine kontinuierliche Bewegung der Bauteilbahn ermöglichen, was zu einem höheren Durchsatz der Montagelinie führen kann.

In einigen Varianten ist die Steuereinheit jedes Bearbeitungsbereichs mit einer Hauptsteuereinheit gekoppelt. Dadurch können die Steuereinheiten bei Bedarf miteinander synchronisiert werden, so dass keine Bearbeitungsstellen doppelt bearbeitet werden. Es kann auch Änderungen in der Bearbeitungsmethode ermöglichen, wenn die Spur in der Breite variiert und/ oder sich die Anzahl der Teilspuren und/oder die Anzahl der Bearbeitungsstellen z. B. abhängig von der Anzahl der Reihen auf dem Bandmaterial ändert. Sie kann daher eine flexiblere Vorrichtung ermöglichen, die eine Vielzahl unterschiedlicher Bauteilbahnen bearbeiten kann.

In einigen Varianten gehorcht die Gesamtzahl der Werkzeuge der Vorrichtung und die Anzahl der Bearbeitungsstellen in jedem Bearbeitungsbereich der mathematischen Beziehung $t < p \leq floor(1,5t)$. In dieser mathematischen Beziehung ist t gleich der Gesamtzahl der Werkzeuge in der Vorrichtung und p gleich der Anzahl der Bearbeitungsstellen in jedem Bearbeitungsbereich (oder gleich der Anzahl der Reihen mit ersten Bauteilen auf dem Bahnmaterial). Das Einhalten dieser Beziehung kann einen effizienteren Durchsatz ermöglichen, da so kein Werkzeug mehr als zwei Bearbeitungsstellen auf der Bauteilbahn bearbeitet.

Ferner gehorcht in einer weiteren Variante die Gesamtzahl der Werkzeuge und die Anzahl der Bearbeitungsstellen zusätzlich der Gleichung $p = 1,5t$. Dies ermöglicht möglicherweise den effizientesten Durchsatz, da jedes Werkzeug eine Bearbeitungsstelle vollständig allein bearbeitet und sich die zweite Bearbeitungsstelle mit einem zweiten Werkzeug teilt. Die Werkzeuge können daher in vollem Umfang genutzt werden.

In einigen Varianten bewegt sich das Werkzeug des ersten Bearbeitungsbereichs in Abhängigkeit von dem Werkzeug des zweiten Bearbeitungsbereichs. Dies kann eine effiziente Steuerung der Werkzeuge ermöglichen, da die Bewegung nicht von einem anderen Werkzeug abhängt. Dies wiederum kann zu einem höheren Durchsatz der Montagelinie führen.

In einigen Varianten ist die Steuereinheit ferner so konfiguriert, dass sie die Werkzeuge so betreibt, dass das Werkzeug des ersten Bearbeitungsbereichs die ersten Bauteile der zweiten Teilspur bearbeitet. Zusätzlich bearbeitet das Werkzeug des zweiten Bearbeitungsbereichs nachfolgende b erste Bauteile der zweiten Teilspur, und wobei b eine ganze Zahl ist.

Alternativ dazu ist die Steuereinheit weiter konfiguriert, um die Werkzeuge so zu betreiben, dass das Werkzeug des ersten Bearbeitungsbereichs b erste Bauteile der zweiten Teilspur bearbeitet. Zusätzlich bearbeitet das Werkzeug des zweiten Bearbeitungsbereichs nachfolgende c erste Bauteile der zweiten Teilspur, wobei b und c ganze Zahlen sind, und b≠c.

Dies erlaubt den Werkzeugen, die Teilspuren und ihre jeweiligen Bearbeitungsstellen auf effizientere Weise zu bearbeiten, falls sich die Anzahl der Teilspuren und/oder Bearbeitungsstellen ändert. Es kann auch einen effizienteren Durchsatz ermöglichen, wenn die ersten Bauteile an jeder Bearbeitungsstelle und/oder auf jeder Teilspur nicht identisch sind.

In einigen Varianten sind eines oder mehrere der ersten Bauteile und/oder eines oder mehrere der zweiten Bauteile elektronische Bauteile.

In einigen weiteren Varianten ist mindestens eines der ersten elektronischen Bauteile und/ oder zweiten elektronischen Bauteile eine (RFID-)Antenne oder Leiterstruktur. Dann ist mindestens eines der ersten elektronischen Bauteile und/oder zweiten elektronischen Bauteile ein mit der (RFID-)Antenne kompatibler (RFID-)Chip oder ein zum Emittieren von Licht geeignetes Bauteil.

In einigen Varianten ist die Anzahl der Teilspuren ein ganzzahliger Faktor der Anzahl der Bearbeitungsstellen. Dadurch ist möglich, dass es mehrere Bearbeitungsstellen innerhalb einer einzelnen Teilspur gibt. Dies kann einen effizienteren Durchsatz ermöglichen, wenn die ersten und/ oder zweiten Bauteile in jeder Teilspur nicht identisch sind, und die Bearbeitung dieser Bauteile unterschiedlich lange dauert.

In einigen Varianten ist die Steuereinheit weiter konfiguriert, um Informationen darüber zu erhalten, ob das erste auf der Bauteilbahn entlang der zweiten Teilspur beförderte Bauteil bearbeitet wurde oder nicht. Dies kann dazu führen, dass weniger Fehler während der Bearbeitung auftreten, da die Steuereinheit Informationen über den Bearbeitungsstatus jedes Bauteils erhält. Dies kann dazu führen, dass die Anzahl der doppelt zu bearbeitenden Bearbeitungsstellen reduziert wird.

In weiteren Varianten erhält die Steuereinheit die Informationen auf optischem Wege. Dieses optische Mittel kann eine Kamera, sein, die mittels UV-Licht, Infrarotlicht oder auf andere Weise Informationen über den Bearbeitungsstatus jedes Bauteils erhalten kann.

In einigen Varianten hängt die Anzahl der Bearbeitungsstellen, die jedem Werkzeug in seinem jeweiligen Bearbeitungsbereich zugeordnet sind, von der Zeit ab, die das Werkzeug benötigt, um von einer der Bearbeitungsstellen sich zur nächsten zu bewegen, sowie ggf. von der Förderung der Bauteilbahn durch den Bearbeitungsbereich. Dies bei der Abfolge der von einem Werkzeug angefahrenen Bearbeitungsstellen zu berücksichtigen ermöglicht einen höheren Durchsatz der Vorrichtung, da die Werkzeuge sehr effizient eingesetzt werden können.

In einigen Varianten umfasst die Vorrichtung eine Markierungseinheit, die so konfiguriert ist, dass sie eines oder mehrere der ersten und/oder zweiten Bauteile markiert. Dadurch kann die Steuereinheit jedes jeweiligen Bearbeitungsbereichs prüfen, ob das erste Bauteil in der gemeinsamen Teilspur vom Werkzeug in seinem Bearbeitungsbereich bearbeitet werden soll. Dies erlaubt ein ständiges und automatisches Anpassen an die Bauteilbahn und deren Bearbeitungsstand. So sind Fehler im Bearbeitungsprozess zu reduzieren.

In einigen weiteren Varianten steuert die Hauptsteuereinheit die Markiereinheit. So kann die Hauptsteuereinheit die ersten Bauteile genau bestimmen, die jedes Werkzeug bearbeitet. Bei einigen anderen Varianten gibt es keine Markierungseinheit, da die Bauteilbahn bereits vor dem Einfahren in die Vorrichtung markiert wird.

In einigen Varianten umfasst die Vorrichtung eine oder mehrere Inspektionseinheiten, die so konfiguriert sind, dass sie eines oder mehrere der Bauteile vor und/oder nach der Bearbeitung in einem oder mehreren der Bearbeitungsbereiche inspizieren. Wenn eine Inspektionseinheit an einer Stelle platziert wird, bevor das Werkzeug ein erstes Bauteil und ein zweites Bauteil bearbeitet, kann die Inspektionseinheit die Markierung auf dem ersten und/oder zweiten Bauteil mit den Informationen in der Steuereinheit eines Bearbeitungsbereichs abgleichen. Wenn eine Inspektionseinheit an einer Stelle platziert wird, die abstromseitig zum Werkzeug liegt, kann die Inspektionseinheit zum Beispiel die Platzierung des zweiten Bauteils überprüfen, um sicherzustellen, dass es korrekt bearbeitet wurde. Zusätzlich oder alternativ kann die Inspektionseinheit jedes Merkmal prüfen, auch wenn es nicht mit einer Markierung versehen ist. In einigen weiteren Varianten kann die Inspektionseinheit prüfen, ob die zweite Bauteil korrekt relativ zu / auf dem ersten Bauteil platziert wurde, ohne sich auf eine Markierung auf oder bei einem der Bauteile zu beziehen.

In einigen Varianten umfasst die Vorrichtung eine Klebstoffauftragseinheit, die so konfiguriert ist, dass sie Klebstoff auf eines oder mehrere der ersten Bauteile aufträgt. Der Klebstoff kann eine sicherere (und ggf. elektrische leitende) Befestigung der zweiten Bauteile an den ersten Bauteilen ermöglichen. Die Klebstoffauftragseinheit kann Anweisungen von der Hauptsteuereinheit erhalten oder alternativ eine separate Steuereinheit sein, die von der Hauptsteuereinheit oder den Steuereinheiten unabhängig ist.

In einigen Varianten erhält die Transportfunktion (Förderantrieb) Anweisungen von der Hauptsteuereinheit. Dies kann es die Hauptsteuereinheit ermöglichen, die Bauteilbahn zu verlangsamen oder anzuhalten, zum Beispiel falls ein Fehler im Bearbeitungsprozess auftritt.

In einigen Varianten handelt es sich bei den Werkzeugen um Prebonder, die so konfiguriert sind, dass sie ein oder mehrere entsprechende zweite Bauteile mit einem oder mehreren entsprechenden ersten Bauteilen vorbonden.

In einigen Varianten umfasst die Vorrichtung eine Epoxy-Auftragseinheit, die zum Auftragen von Epoxyharz auf eines oder mehrere der bearbeiteten Bauteile dient. So können die bearbeiteten Bauteile verklebt werden und/oder vor äußeren Einflüssen geschützt werden.

Darüber hinaus wird hier ein Verfahren mit den Merkmalen des Anspruchs 12 vorgeschlagen.

Ein solches Verfahren dient zur Bedienung von mindestens zwei Werkzeugen in einem ersten und mindestens einem zweiten Bearbeitungsbereich. Dem jeweiligen Werkzeug in jedem Bearbeitungsbereich wird eine Anzahl von Bearbeitungsstellen zugeweisen, durch die erste Bauteile, die von einer Bauteilbahn getragen werden, entlang einer Spur durch den ersten und mindestens den zweiten Bearbeitungsbereich befördert werden. Darüber hinaus ist die Gesamtzahl der Werkzeuge im Verfahren geringer als die Anzahl der Bearbeitungsstellen in jedem Bearbeitungsbereich. Zusätzlich umfasst die Spur eine Anzahl von Teilspuren, die der Anzahl der Bearbeitungsstellen entspricht. Darüber hinaus ist jedes Werkzeug so konfiguriert, dass es an jeder Bearbeitungsstelle in seinem Bearbeitungsbereich jeweils zweite Bauteile an entsprechende erste Bauteile montiert.

Das Verfahren umfasst das Konfigurieren einer Steuereinheit, um das Werkzeug in Abhängigkeit von einer Förderbewegung der Bauteilbahn entlang der Spur an einer oder mehreren der Bearbeitungsstellen in seinem Bearbeitungsbereich zu positionieren.

Zusätzlich ist die Steuereinheit weiterhin so konfiguriert, dass sie das Werkzeug zur Montage eines ersten oder zweiten Bauteils an der jeweiligen Bearbeitungsstelle betreibt. Die Steuereinheit ist ferner so konfiguriert, dass in dem ersten Bereich ausgewählte erste Bauteile, die auf der Bauteilbahn entlang einer ersten Teilspur befördert werden, und ausgewählte erste Bauteile, die auf der Bauteilbahn entlang einer zweiten Teilspur befördert werden, durch das Werkzeug des ersten Bereichs bearbeitet werden. Die Steuereinheit ist ferner so konfiguriert, dass im zweiten Bereich ausgewählte ersten Bauteile, die auf der Bauteilbahn entlang einer dritten Teilspur befördert werden, und die ersten Bauteile, die auf der Bauteilbahn entlang der zweiten Teilspur befördert und im ersten Bereich nicht bearbeitet werden, durch das Werkzeug des zweiten Bereichs bearbeitet werden.

Das Verfahren kann zu einer Erhöhung der Kapazitätsauslastung der einzelnen Instrumente führen, indem sie die gemeinsame Nutzung von Teilspuren ermöglicht. Dies kann dazu führen, dass Werkzeuge einzelne Reihen nicht mehr vollständig, sondern nur noch teilweise zusammensetzen. Ein nachfolgendes Werkzeug kann dann die noch unbearbeiteten Bearbeitungsstellen bestücken, so dass die Reihe schließlich komplett montiert wird.

Dies kann zu einem Verfahren führen, das einen hohen Durchsatz der Montagelinie ermöglicht. Bei diesem Muster teilen sich zwei Werkzeuge eine Teilspur, die sich mit den übrigen Teilspuren verbindet, die das jeweilige Werkzeug ebenfalls bearbeiten muss.

In einigen Varianten grenzt die zweite Teilspur sowohl an die erste Teilspur als auch an eine dritte Teilspur. Dies kann einen höheren Durchsatz der Montagelinie ermöglichen, da die Werkzeuge nicht zwei Teilspuren überqueren müssen, um die gemeinsame Teilspur zu bearbeiten.

Zusätzlich wird hier eine zweite Vorrichtung mit den Merkmalen von Anspruch 14 vorgeschlagen. Diese eine Vorrichtung dient zum Betrieb von mindestens zwei Werkzeugen in einem ersten und mindestens einem zweiten Bearbeitungsbereich, in jedem Bearbeitungsbereich ist dem jeweiligen Werkzeug eine Anzahl von Bearbeitungsstellen zugeordnet, durch die erste Bauteile, die von einer Bauteilbahn getragen werden, entlang einer Spur durch den ersten und mindestens den zweiten Bearbeitungsbereich gefördert werden. Darüber hinaus ist die Gesamtzahl der Werkzeuge in der Vorrichtung größer als die Anzahl der Bearbeitungsstellen in jedem Bearbeitungsbereich. Dabei umfasst die Spur eine Anzahl von Teilspuren, die der Anzahl der Bearbeitungsstellen entspricht. Darüber hinaus kann zum Beispiel das Werkzeug jedes Bearbeitungsbereichs so konfiguriert sein, dass es an jeder zugeordneten Bearbeitungsstelle in seinem Bearbeitungsbereich jeweils zweite Bauteile an jeweils erste Bauteile montiert.

Die Vorrichtung umfasst eine Steuereinheit, die so konfiguriert ist, dass sie in Abhängigkeit von einer Förderbewegung der Bauteilbahn entlang der Spur das Werkzeug an einer oder mehreren der Bearbeitungsstellen in ihrem Bearbeitungsbereich positioniert. Die Steuereinheit ist ferner so konfiguriert, dass sie das Werkzeug zum Beispiel zum Montieren eines ersten oder zweiten Bauteils an der jeweiligen Bearbeitungsstelle betreibt.

Die Steuereinheit ist ferner so konfiguriert, dass in dem ersten Bereich ausgewählte ersten Bauteile, die auf der Bauteilbahn entlang einer ersten Teilspur befördert werden, und ausgewählte erste Bauteile, die auf der Bauteilbahn entlang einer zweiten Teilspur befördert werden, durch das Werkzeug des ersten Bereichs bearbeitet werden. Die Steuereinheit ist ferner so konfiguriert, dass im zweiten Bereich ausgewählte ersten Bauteile, die auf der Bauteilbahn entlang einer dritten Teilspur befördert werden, und die ersten Bauteile, die auf der Bauteilbahn entlang der zweiten Teilspur befördert und im ersten Bereich nicht bearbeitet werden, durch das Werkzeug des zweiten Bereichs bearbeitet werden.

Die Vorrichtung kann zu einer Erhöhung der Kapazitätsauslastung der einzelnen Werkzeuge führen, indem sie die gemeinsame Nutzung von Teilspuren ermöglicht. Dies kann dazu führen, dass Werkzeuge einzelne Reihen nicht mehr vollständig, sondern nur noch teilweise bearbeiten. Ein nachfolgendes Werkzeug kann dann die noch unbearbeiteten Bearbeitungsstellen in der Reihe bearbeiten, so dass die Reihe schliesslich vollständig bearbeitet ist (zum Beispiel an einem ersten Beuteil der Reihe ein zweites Bauteil montiert ist). Dies kann dazu führen, dass die Vorrichtung den höchsten Durchsatz der Montagelinie ermöglicht.

In einigen Varianten sind die ausgewählten ersten Bauteile alle Bauteile in der Teilspur. Dadurch können die Werkzeuge auf eine Weise arbeiten, die für die Bauteilbahn, auf der die Werkzeuge arbeiten, besonders effizient ist.

In einigen Varianten grenzt die zweite Teilspur sowohl an die erste als auch an die dritte Teilspur. Dies kann einen höheren Durchsatz der Montagelinie ermöglichen, da die Werkzeuge nicht zwei Teilspuren überqueren müssen, um eine gemeinsame Teilspur zu bearbeiten. In einigen Varianten arbeiten die mindestens zwei Werkzeuge zusammen, um alle Bearbeitungsstellen in den ersten Teilspuren zu bearbeiten.

In einigen alternativen Varianten sind die erste Teilspur und die dritte Teilspur die gleiche Teilspur. Dies kann einen hohen Durchsatz der Vorrichtung ermöglichen, da die Werkzeuge, die die Teilspuren bearbeiten, möglicherweise nicht zwischen den Teilspuren hin- und herfahren müssen, wodurch die Verweilzeit der Werkzeuge verringert wird.

In einigen Varianten ist die Anzahl der Bearbeitungsstellen ein ganzzahliger Faktor der Anzahl der Werkzeuge. Dadurch ist es möglich, dass mehrere Werkzeuge eine einzelne Teilspur bearbeiten. Dies kann einen effizienten Durchsatz ermöglichen, wenn die ersten und/oder zweiten Teile in jeder Teilspur nicht identisch sind und unterschiedliche Werkzeuge zu ihrer Bearbeitung erfordern.

Die zweite Vorrichtung kann auch Aspekte enthalten, die in Bezug auf die erste Vorrichtung beschrieben werden, sofern sie kompatibel sind.

Auch wenn einige der oben beschriebenen Aspekte in Bezug auf die Vorrichtung beschrieben sind, können diese Aspekte auch das Verfahren betreffen und umgekehrt.

Zwischen einzelnen oder allen Bearbeitungsbereichen der Vorrichtungen sind in einigen Varianten Pufferbereiche für die Bauteilbahn vorgesehen, um Unterschiede im Bewegungsablauf der Bauteilbahn an den aufeinanderfolgenden Bearbeitungsbereichen auszugleichen. Diese Unterschiede sind hervorgerufen durch etwaige unterschiedliche Zeitbedürfnisse der jeweiligen Werkzeuge (i) bei der Bearbeitung an den Bearbeitungsstellen und/oder (ii) beim Wechseln von einer Teilspur zur nächsten.

Kurzbeschreibung der Figuren

Obige und weitere Aspekte der Lösung sind nachstehend zur Erläuterung anhand der Zeichnungen beschrieben, wobei sich gleiche Bezugszeichen auf gleiche Teile beziehen, und in welchen:

Fig. 1 eine perspektivische Ansicht einer schematischen Darstellung einer Vorrichtung zum Betreiben von mindestens zwei Werkzeugen gemäß einer hier beschriebenen Variante zeigt;

Fig. 2 eine perspektivische Ansicht einer schematischen Darstellung einer der Bearbeitungsbereichen gemäß einer hier beschriebenen Variante zeigt;

Fig. 3a und b einen Querschnitt durch eine schematische Darstellung der Spur und des Bauteilbahns gemäß einigen hier beschriebenen Varianten zeigen;

Fig. 4 eine perspektivische Ansicht einer schematischen Darstellung der Bauteilbahn und der Spur entsprechend einer hier beschriebenen Variante zeigt;

Fig. 5 ein Blockdiagramm der Vorrichtung gemäß einer hier beschriebenen Variante zeigt;

Fig. 6 eine schematische Darstellung eines Teils einer Montagelinie entsprechend einer hier beschriebenen Variante zeigt;

Fig. 7a bis g schematische Darstellungen verschiedener Verarbeitungsmuster gemäß einigen hier beschriebenen Varianten zeigen;

Fig. 8 eine Tabelle mit der Gesamtzahl der Werkzeuge, der Bearbeitungsstellen und der Teilspuren gemäß einigen hier beschriebenen Varianten zeigt; und

Fig. 9 ein Flussdiagramm des Verfahrens gemäß einer hier beschriebenen Variante zeigt.

Detaillierte Beschreibung der Figuren

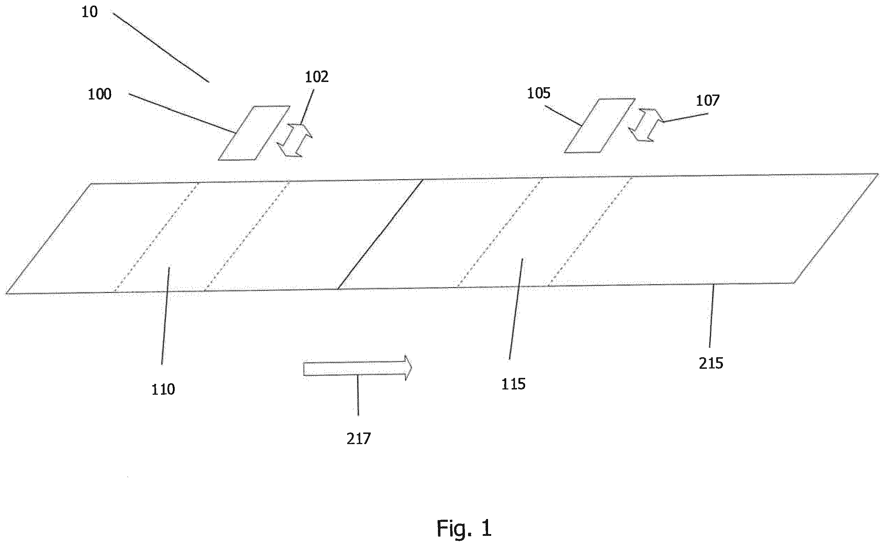

Fig. 1 zeigt eine perspektivische Ansicht einer schematischen Darstellung der Vorrichtung zum Betreiben von mindestens zwei Werkzeugen gemäß einer hier offenbarten Variante.

In Fig. 1 umfasst die Vorrichtung 10 zwei Werkzeuge 100, 105, die so konfiguriert sind, dass sie sich in die Richtung ihres jeweiligen Pfeils 102, 107 bewegen. Die Bauteilbahn 215 ist so konfiguriert, dass sie sich von links nach rechts bewegt in Pfeilrichtung 217. Jedes Werkzeug 100, 105 bewegt sich daher orthogonal zur Bewegung der Bauteilbahn 215. Die Bewegung der Werkzeuge 100, 105 und der Bauteilbahn 215 ist nicht auf die in dieser Ausführung gezeigten Richtungen beschränkt.

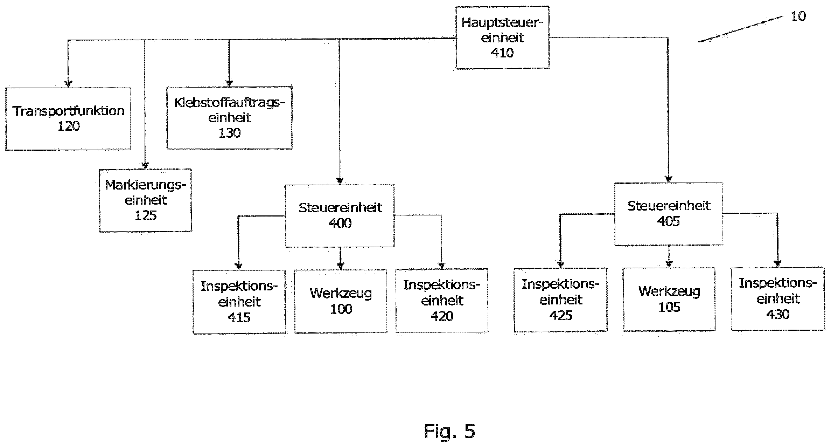

In dieser Ausgestaltung hat jedes Werkzeug 100, 105 einen entsprechenden Bearbeitungsbereich 110, 115. Jedes Werkzeug 100, 105 ist auf eine Bewegung innerhalb seines eigenen Bearbeitungsbereichs 110, 115 beschränkt, der durch die Steuereinheit siehe Fig. 5 des Bereichs 110, 115 bestimmt wird. Die Bearbeitungsbereiche 110, 115 in dieser Variante decken die gesamte Bauteilbahn 215 ab. In einigen nicht gezeigten Varianten decken die Bearbeitungsbereiche 110, 115 nicht die gesamte Bauteilbahn 215 ab. In einigen ebenfalls nicht gezeigten Varianten befindet sich mehr als ein Werkzeug 100, 105 im gleichen Bearbeitungsbereich 110, 115.

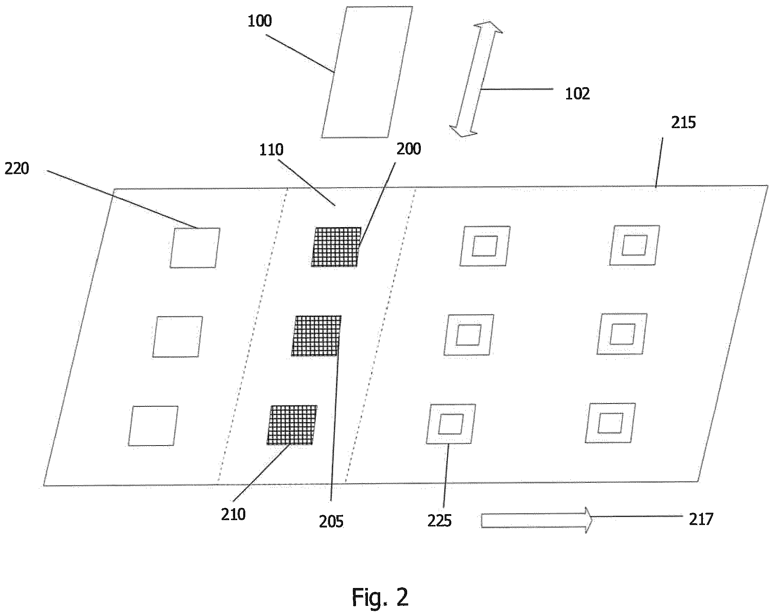

Bei dieser Variante hat jedes Werkzeug 100, 105 eine Nadel, einen Bauteilvorrat mit zweiten Bauteilen (siehe fig. 2) und eine Aufnahme für den Bauteilvorrat. Bei einigen Varianten hat jedes Werkzeug nur einige dieser Komponenten, oder anstelle der Nadel eine Punktlaserquelle. Die Aufnahme ist zusammen mit dem Bauteilvorrat positionierbar in x-Richtung, y-Richtung und in Drehrichtung positioniert. In einigen Varianten ist die Aufnahme nur in einigen dieser Richtungen positionierbar. Die zweiten Bauteile (siehe Fig. 2) haften mit ihrer von der Bauteilbahn 215 abgewandten Seite an einem Träger (z.B. einer Folie oder Glasplatte) und werden mit der Nadel oder dem laserstrahl auf die ersten Bauteile (siehe Fig. 2) übertragen. Die zweiten Bauteile (siehe Fig. 2) können mit jeder geeigneten Methode auf die ersten Bauteile (siehe Fig. 2) übertragen werden.

Die Vorrichtung 10 ist nicht auf nur zwei Werkzeuge 100, 105 beschränkt; sie kann eine beliebige Anzahl t (zum Beispiel 2 bis zu 10 oder mehr) Werkzeuge 100, 105 umfassen. In einigen Varianten befinden sich jedes Werkzeug 100, 105 und sein jeweiliger Bearbeitungsbereich 110, 115 in einem separaten Modul. In einigen nicht gezeigten Varianten befinden sich mehrere Werkzeuge 100, 105 innerhalb desselben Gehäuses. In einigen Varianten sind die Werkzeuge 100, 105 zum Beispiel Vorverbinder (sog. Prebonder), die so konfiguriert sind, dass sie jeweilige zweite Bauteile siehe Fig. 2 mit jeweiligen ersten Bauteilen siehe Fig. 2 vorverbinden.

In dieser Variante ist jedes Werkzeug 100, 105 so konfiguriert, dass es sich in Bezug auf das andere Werkzeug 100, 105 zumindest nahezu synchron und in Abhängigkeit von diesem bewegt. In einigen Varianten ist jedes Werkzeug 100, 105 mit der Bewegung des anderen Werkzeugs 100, 105 durch eine Steuerung zumindest nahezu synchronisiert und bewegt sich nicht in Abhängigkeit vom einem anderen Werkzeug 100, 105.

Fig. 2 zeigt eine perspektivische Ansicht einer schematischen Darstellung einer der Bearbeitungsbereichen gemäß einer hier beschriebenen Variante.

In der Variante von Fig. 2 gibt es drei Bearbeitungsstellen 200, 205, 210 im Bearbeitungsbereich 110 des Werkzeugs 100. Es sei verstanden, dass die Vorrichtung mehr als drei Bearbeitungsstellen 200, 205, 210 umfassen kann. In einigen Varianten bearbeitet das Werkzeug 100 nicht alle Bearbeitungsstellen 200, 205, 210 in seinem Bearbeitungsbereich 110. Es sei verstanden, dass jede Bearbeitungsregion mehrere, z.B. drei Bearbeitungsstellen umfasst, aber dass das Werkzeug nur zwei dieser Bearbeitungsstellen bearbeitet. Dabei muss das Werkzeug nicht alle Bearbeitungspunkte bearbeiten. Vielmehr beschränkt sich eines oder mehrere der Werkzeuge darauf, nur eine oder einige der Bearbeitungsstellen 200, 205, 210 in seinem Bearbeitungsbereich 110 zu bearbeiten.

Eine in der Vorrichtung 10 zu bearbeitende Bauteilbahn 215 hat mehrere Reihen von ersten 220 und zweiten 225 Bauteilen, und jede Bauteilreihe ist geführt an / durch eine Bearbeitungsstelle 200, 205, 210. In dieser Ausführung gibt es drei Reihen von Bauteilen 220, 225 und drei Bearbeitungsstellen 200, 205, 210. Die Anzahl p der Bearbeitungsstellen 200, 205, 210 kann sich entsprechend der Anzahl der Reihen von Bauteilen 220, 225 auf der Bauteilbahn 215 ändern. In dieser Variante werden die zweiten Bauteile 225 während der Verarbeitung auf den ersten Bauteilen 220 platziert. Bei einigen anderen Varianten werden die zweiten Bauteile 225 vor der Verarbeitung auf den ersten Bauteilen 220 platziert.

Bei dieser Variante werden die ersten Bauteile 220 von der Bauteilbahn 215 durch den Bearbeitungsbereich 110 gefördert und zweite Bauteile 225 vor oder bei der Bearbeitung durch das Werkzeug 100 auf die ersten Bauteile 220 gelegt. In einigen Varianten werden die zweiten Bauteile 225 von den ersten Bauteilen 220 durch eine Trägerschicht getrennt.

Bei einigen Varianten sind die zweiten Bauteile 225 an einer Trägerschicht gehalten und an einer zweiten Bauteilbahn über die ersten Bauteile 220 herangeführt.

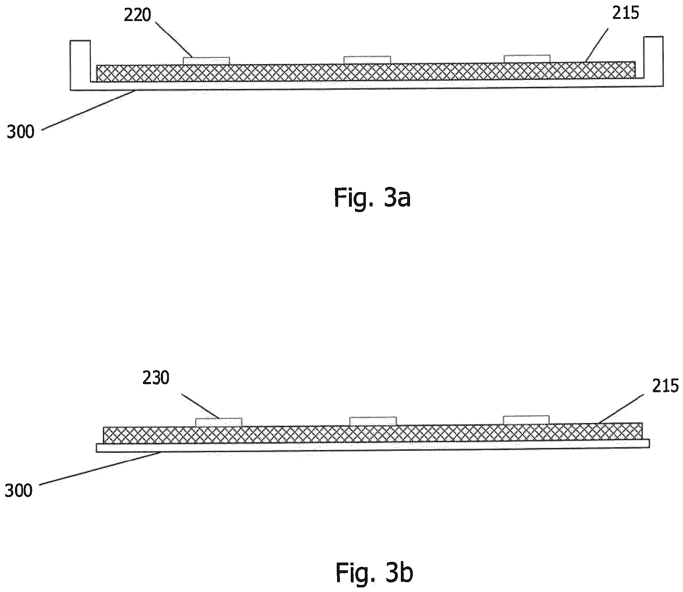

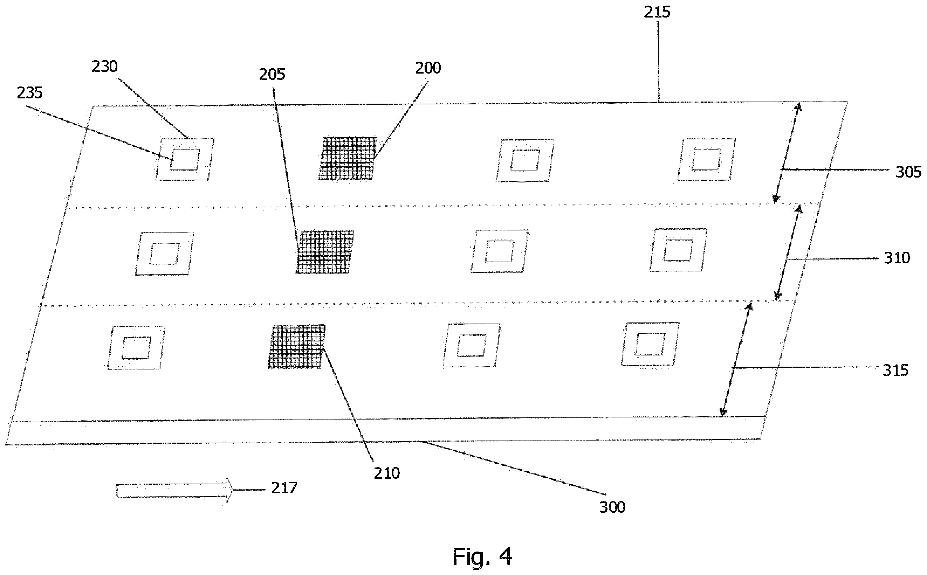

In einigen Varianten sind eines oder mehrere der ersten 220 und/oder zweiten 225 Bauteile elektronische Bauteile siehe Fig. 3b und Fig. 4. Die Be-/Verarbeitung des ersten und/oder zweiten Bauteils erfolgt in Abhängigkeit was für eine Art von Bauteil das erste und/oder zweite Bauteil ist. In einigen Varianten umfasst die Be-/Verarbeitung mechanische Betätigungsmittel, Wärmemittel und/oder Lichtmittel und/oder Ultraschallmittel und/oder jedes andere geeignete Mittel.

In einigen Varianten sind eines oder mehrere der ersten und/oder zweiten elektronischen Bauteile (RFID-)Antennen und eines oder mehrere der ersten und/oder zweiten elektronischen Bauteile Chips. In einigen Varianten sind die Chips RFID-Chips.

Die Figuren 3a und b zeigen einen Querschnitt durch eine schematische Darstellung der Spur und des Bauteilbahns gemäß einigen hier beschriebenen Varianten.

In der Variante von Fig. 3a ist die Spur 300 U-förmig, wobei die Bauteilbahn 215 zwischen jeweiligen seitlichen Schenkeln der U-förmigen Spur durch die Vorrichtung gefördert wird. Die Spur 300 kann aus jedem geeigneten reibungsarmen Material hergestellt werden, das es dem Bauteilbahn 215 ermöglicht, sich ungehindert / leichter entlang der Spur 300 zu bewegen. In der Variante von Figur 3b ist die Spur 300 eine flache Ebene. In einer anderen Variante ist die Spur eine Vakuumtrommel, welche die Bauteilbahn 215 fördert. Bei Varianten, bei denen Vakuumtrommeln oder eine gekrümmte Stütze pro Modul vorhanden sind, ist die Bahn eine Bahnkurve. In einigen anderen Varianten gibt es keine physische Spur 300, und die Spur 300 ist eine imaginäre Ebene unter dem Bauteilbahn 215. In dieser Variante sind die ersten Bauteile elektronische Bauteile 230. Die Spur ist das, worauf sich die Bauteilbahn befindet. Es gibt also eine einzige Spur, auf der die Bauteilbahn durch die gesamte Vorrichtung bewegt wird.

Fig. 4 zeigt eine perspektivische Ansicht einer schematischen Darstellung der Bauteilbahn und der Spur entsprechend einer hier beschriebenen Variante.

In der Variante von Fig. 4 befindet sich die Bauteilbahn 215 auf der in Fig. 3b dargestellten Spur 300 und wird entlang dieser Spur 300 in Pfeilrichtung 217 gefördert. In dieser Variante ist die Spur 300 in drei Teilspuren 305, 310, 315 unterteilt, die den drei Bearbeitungsstellen 200, 205, 210 entsprechen. So ist in jeder Teilspur 305 eine Bearbeitungsstelle 200 vorhanden ist und eine Reihe von ersten 230 und zweiten 235 elektronischen Bauteilen wird entlang gefördert, wenn die zweiten Bauteile 235 bereits platziert sind. So ist die Teilspur 305 eine erste Reihe von Antennen, die Teilspur 310 eine zweite Reihe und die Teilspur 315 eine dritte Reihe. In einigen Varianten gibt es mehr als eine Bearbeitungsstelle 200, 205, 210 in jeder Teilspur 305, 310, 315. In einigen Varianten ist die Anzahl s der Teilspuren 305, 310, 315 ein ganzzahliger Faktor der Anzahl p der Bearbeitungsstellen 200, 205, 210. In einigen Varianten ist die Anzahl p der Bearbeitungsstellen 200, 205, 210 in jeder Teilspur 305, 310, 315 ungleich. In einigen Varianten wird die Anzahl s der Teilspuren durch die Steuereinheit (siehe Fig. 5) jedes Bearbeitungsbereichs 110, 115 oder die Hauptsteuereinheit (siehe Fig. 5) bestimmt. Eine Teilspur ist eine Reihe von Antennen. Zum Beispiel ist die Teilspur 305 eine erste Reihe von Antennen, die Teilspur 310 eine zweite Reihe und die Teilspur 315 eine dritte Reihe.

Fig. 5 zeigt ein Blockdiagramm der Vorrichtung gemäß einer hier beschriebenen Variante.

In der Variante von Fig. 5 ist die Steuereinheit 400, 405 jedes Werkzeugs 100, 105 mit einer Hauptsteuereinheit 410 gekoppelt. In einigen Varianten kann die Hauptsteuereinheit 410 Eingaben von einem externen Programm oder Eingaben von einem Bediener empfangen und verarbeiten. In einigen Varianten hat die Hauptsteuereinheit 410 keine externen Bediener-Eingänge. In einigen Varianten steuert die Steuereinheit 400, 405 mehr als ein Werkzeug 100, 105.

In dieser Variante ist die Hauptsteuereinheit 410 mit der Transportfunktion 120 gekoppelt. Diese Transportfunktion 120 ist so konfiguriert, dass sie die Bauteilbahn 215 durch die Vorrichtung 10 befördert. Die Transportfunktion 120 kann die Bauteilbahn 215 in Abhängigkeit von der gewünschten Bewegung entweder kontinuierlich oder intermittierend fördern. In einigen Beispielen ist die Transportfunktion 120 unabhängig von der Hauptsteuereinheit 410.

Bei dieser Variante ist die Hauptsteuereinheit 410 mit einer Markierungseinheit 125 gekoppelt. Die Hauptsteuereinheit 410 steuert die Markierung des ersten 220, 230 und/oder zweiten 225, 235 Bauteils mit einer oder mehreren Anzeigen durch die Markierungseinheit 125, während die Bauteile 220, 225, 230, 235 durch oder unter der Markierungseinheit 125 hindurch geführt werden. Diese Indikatoren können der Steuereinheit 400, 405 jedes Werkzeugs 100, 105 anzeigen, ob die Bauteile 220, 225, 230, 235 von ihrem jeweiligen Werkzeug 100, 105 bearbeitet werden müssen. In einigen Varianten liefert die Markierungseinheit 125 Informationen an die Hauptsteuereinheit 410, auf denen Bauteile 220, 225, 230, 235 mit einem oder mehreren Indikatoren und die Indikatoren, mit denen die Bauteile 220, 225, 230, 235 markiert wurden. In einigen Varianten hat jede Steuereinheit 400, 405 eine entsprechende Markierungseinheit 125. In einigen Varianten gibt es keine Markierungseinheit 125. In einigen Varianten ist die Markierungseinheit 125 unabhängig von der Hauptstteuereinheit 410 und den Steuereinheiten 400, 405.

In der Variante von Fig. 5 ist die Hauptsteuereinheit 410 mit einer Klebstoffauftragseinheit 130 gekoppelt, die so konfiguriert ist, dass sie Klebstoff auf eines oder mehrere der ersten Bauteile 220, 230 aufträgt, während die Bauteile 200, 225, 230, 235 durch oder unter der Klebstoffauftragseinheit 130 hindurchgeführt werden. Die Hauptsteuereinheit 410 kann Informationen an die Klebstoffauftragseinheit 130 senden, welche ersten Bauteile 220, 230 mit Klebstoff beschichtet werden müssen. In einigen Varianten verfügt jede Steuereinheit 400, 405 über eine Klebstoffauftragseinheit 130. Bei einigen Varianten ist die Klebstoffauftragseinheit 130 unabhängig von der Hauptsteuereinheit 410 und den Steuereinheiten 400, 405. Bei einigen Varianten gibt es keine Klebstoffauftragseinheit 130.

In der Variante von Fig. 5 ist die Steuereinheit 400, 405 jedes Werkzeugs 100, 105 mit zwei Inspektionseinheiten 415, 420, 425, 430 gekoppelt. Die Inspektionseinheit 415, 425 vor jedem jeweiligen Werkzeug 100, 105 inspiziert die Bauteile 220, 225, 230, 235, um zu überprüfen, ob die Bauteile 220, 225, 230, 235 bearbeitet wurden oder nicht, während die Bauteile 220, 225, 230, 235 durch oder unter der Inspektionseinheit 415, 425 hindurchgeführt werden. Die Inspektionseinheit 415, 425 sendet diese Information dann an ihre jeweilige Steuereinheit 400, 405. Die Inspektionseinheit 415, 425 kann diese Informationen über optische Mittel wie eine Kamera oder andere geeignete ander optische Sensor-Mittel erhalten. In einigen Varianten erhält die Inspektionseinheit 415, 425 Informationen über die Indikatoren, die von der Markierungseinheit 125 auf den Bauteilen 220, 225, 230, 235 durch das gleiche oder ein anderes optisches Mittel markiert werden.

In der Variante von Fig. 5 prüft die Inspektionseinheit 420, 430 nach jedem jeweiligen Werkzeug 100, 105 die Bauteile 220, 225, 230, 235 daraufhin, ob die Bauteile 220, 225, 230, 235 korrekt bearbeitet wurden oder nicht, während die Bauteile 200, 225, 230, 235 durch oder unter der Inspektionseinheit 420, 430 hindurchgeführt werden. Bei einigen Varianten prüft die Inspektionseinheit 420, 430 auch, ob die Platzierung des zweiten Bauteils 225, 235 korrekt ist. In einigen Varianten sendet die Inspektionseinheit 420, 430 diese Information dann an ihre jeweilige Steuereinheit 400, 405. In einigen Varianten sendet die Steuereinheit 400, 405 diese Information möglicherweise an die Hauptsteuereinheit 410. In einigen Varianten kann die Hauptsteuereinheit 410 die Steuereinheit 400, 405 eines nachfolgenden Werkzeugs 100, 105 übersteuern und sie so steuern, dass sie ein fehlendes Bauteil 220, 225, 230, 235 bearbeitet. In einigen Varianten kann die Hauptsteuereinheit 410 einen Alarm auslösen oder eine visuelle Benachrichtigung an einen Bediener senden, um anzuzeigen, dass ein Bauteil 220, 225, 230, 235 vom Werkzeug 100, 105 verfehlt wurde. In einigen Varianten erfolgt das Auslösen eines Alarms oder das Senden einer visuellen Benachrichtigung, wenn die Platzierung des zweiten Bauteils 225, 235 unbefriedigend ist. Die Inspektionseinheit 420, 430 kann diese Information durch optische Mittel wie eine Kamera, UV-Licht, Infrarotlicht oder jedes andere geeignete optische Mittel erhalten.

Bei einigen Varianten verfügt jede oder zumindest einige der Inspektionseinheiten 415, 420, 425, 430 über wenigstens eine Kamera und optional wenigstens eine Lichtquelle und einen Umlenkspiegel. Die Inspektionseinheit 415, 420, 425, 430 oder zumindest Teile der Inspektionseinheit 415, 420, 425, 430 (wenn Lichtquelle und Umlenkspiegel vorhanden sind) vor und/oder nach einem jeweiligen Werkzeug 100, 105 kann für die Bilderfassung orthogonal zur Bewegung der Bauteilbahn 215 positioniert werden.

In einigen Varianten gibt es Inspektionseinheiten 415, 420, 425, 430 vor und/oder nach einer Vielzahl von Werkzeugen 100, 105. In einigen Varianten gibt es eine Inspektionseinheit 415, 420, 425, 430 am Anfang der Vorrichtung 10 und am Ende der Vorrichtung 10. In einigen Varianten befinden sich keine Inspektionseinheiten 415, 420, 425, 430 in der Vorrichtung 10.

In einigen Ausführungen ist die Hauptsteuereinheit 410 mit einer Epoxyauftragseinheit (nicht abgebildet) gekoppelt, die so konfiguriert ist, dass sie Epoxyharz auf zu bearbeitende Bauteile 220, 225, 230, 235 aufträgt, während die Bauteile 200, 225, 230, 235 durch oder unter der Epoxy-Auftragseinheit hindurchgeführt werden. Die Hauptsteuereinheit 410 kann Informationen an die Epoxyauftragseinheit senden, die angeben, welche bearbeiteten Bauteile mit Epoxyharz versehen werden müssen. In einigen Varianten verfügt jede Steuereinheit 400, 405 über eine Epoxyauftragseinheit. Bei einigen Ausführungen ist die Epoxyauftragseinheit unabhängig von der Hauptsteuereinheit 410 und den Steuereinheiten 400, 405. In einigen Varianten gibt es keine Epoxyauftragseinheit.

Bei einigen Varianten befindet sich jede Steuereinheit 400, 405 und ihre jeweiligen Werkzeug 100, 105 und Inspektionseinheiten 415, 420, 425, 430 in einem eigenen Modul, das von den anderen Modulen der Vorrichtung 10 unabhängig, aber mit diesen (aufstromseitig und abstromseitig) verbunden ist. Bei einigen Varianten befinden sich mehrere Steuereinheiten 400, 405 und ihre jeweiligen Komponenten im selben Modul. In jedem dieser Fälle ist jedes Modul mit der Hauptsteuereinheit 410 gekoppelt. Bei einigen Varianten ist die gesamte Vorrichtung 10 ein Modul.

Bei einigen Varianten ist eine Schnittstelle der Hauptsteuereinheit 410 an der Vorrichtung 10 vorgesehen. Die Schnittstelle würde es einem Benutzer ermöglichen, Informationen über die Vorrichtung 10 zu erhalten und Parameter und/oder Anweisungen einzugeben. Bei einigen nicht abgebildeten Varianten enthält die Vorrichtung 10 auch einen Kurzstrecken-Transceiver, der zur Übertragung von Informationen über die Vorrichtung 10 an ein mobiles Gerät verwendet wird. Der Kurzstrecken-Transceiver würde es auch ermöglichen, Eingaben an die Hauptsteuereinheit 410 von einem mobilen Gerät zu empfangen. Bei einigen Varianten ist die Hauptsteuereinheit 410 über Ethernet, Fieldbus, etc. mit einer Schnittstelle verbunden und/ oder jeder anderen geeigneten Ausrüstung zur Fernüberwachung und -steuerung.

Bei einigen Varianten hat jede Steuereinheit 400, 405 und/oder jede Inspektionseinheit 415, 420, 425, 430 und/oder die Transportfunktion 120 und/oder die Markierungseinheit 125 und/oder die Klebstoffauftragseinheit 130 und/oder die Epoxy-Auftragseinheit ihre eigene Schnittstelle. Jede dieser Schnittstellen kann der Vorrichtung zugeordnet sein und/oder einen Kurzstrecken-Transceiver zum Senden und Empfangen von Informationen von einem mobilen Gerät verwenden und/oder über Ethernet verbunden und/oder jedes andere geeignete Mittel zur Fernüberwachung und -steuerung.

Die Vorrichtung 10 kann einige oder alle der oben genannten Komponenten umfassen. Die oben genannten Komponenten können ihre jeweiligen Prozesse in einer anderen Reihenfolge als oben beschrieben ausführen; einige der Komponenten können ihre Prozesse gleichzeitig ausführen.

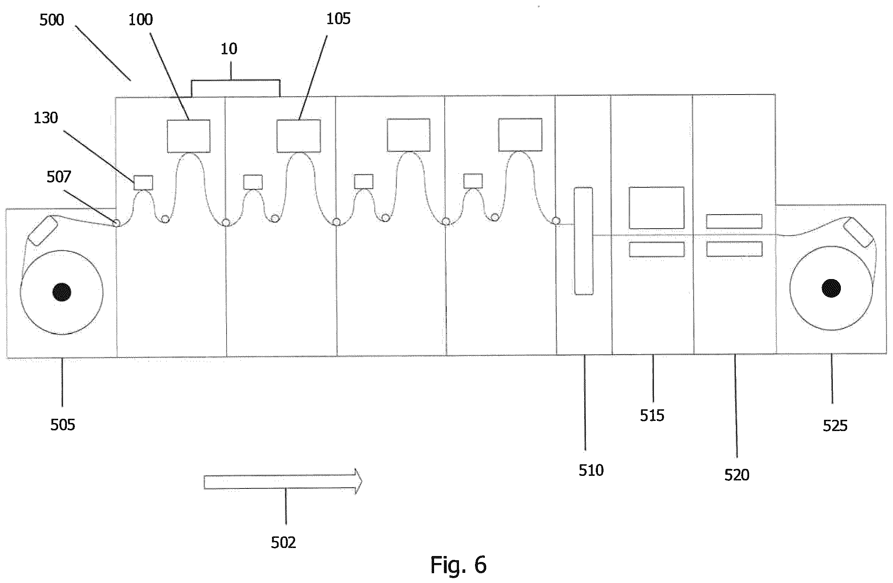

Fig. 6 zeigt eine schematische Darstellung der Vorrichtung als Teil einer Montagelinie entsprechend einer hier beschriebenen Variante.

In der Variante von Fig. 6 gibt es zwei Realisierungen der Vorrichtung 10, wie sie in der Ausgestaltung der Fig. 1 dargestellt ist. Es gibt keine Begrenzung der Anzahl der Module 10 mit jeweiligen Werkzeuge 100, 105 in der Montagelinie 500, solange die Anzahl der Werkzeuge 100, 105 in der Montagelinie 500 geringer ist als die Anzahl der Bearbeitungsstellen 200, 205, 210 in jedem Bearbeitungsbereich 110, 115.

In dieser Variante gibt es eine Abwickeltrommel 505, die so konfiguriert ist, dass die Bauteilbahn 215 in Pfeilrichtung 502 in die Montagelinie 500 eingeführt wird.

In dieser Ausführung gibt es mehrere Transport-Rollen 507, die dazu dienen, die Bauteilbahn 215 durch die Montagelinie 500 zu führen. Diese Rollen 507 werden verwendet, da es in dieser Ausführung keine physische Spur 300 gibt. Diese Rollen 507 fördern die Bauteilbahn 215 möglichst ungehindert durch die einzelnen Module. Selbst wenn eine physische Spur 300 vorhanden wäre, könnten die Rollen 507 die Bauteilbahn 215 durch die Module führen.

In einigen Varianten jedes Modul (bestehend aus 130, 415, 100, 420) hat wenigstens eine Vakuumtrommel unterhalb des Werkzeugs 100 zum Fördern der Bauteilbahn 215 in Pfeilrichtung 502 oder jedem Werkzeug ist eine Vakuumtrommel zugeordnet. Eine zweite Vakuumtrommel kann unterhalb der Klebstoffauftragseinheit 130 vorhanden sein.

Bei dieser Variante wird die Bauteilbahn 215 nach dem Durchlauf durch die oder jedes der Module in ein Puffermodul 510 eingeführt. Das Puffermodul 510 ist so konfiguriert, dass es die Bauteilbahn 215 zwischenspeichert, falls die dem Puffermodul 510 nachgeschalteten Einheiten hinter den dem Puffermodul 510 vorgeschalteten Einheiten mit der Bearbeitung der Bauteile auf der Bauteilbahn 215 zurückbleiben sollten. In einigen Varianten befindet sich kein Puffermodul 510 in der Montagelinie 500.

In einer Variante kann in jedem Modul zwischen der jeweiligen Klebstoffauftragseinheit 130 und dem jeweiligen Werkzeug 100 sowie nach dem jeweiligen Werkzeug 100 und vor der nachfolgenden Klebstoffauftragseinheit des nachfolgenden Moduls oder anders ausgedrückt vor und nach dem jeweiligen Werkzeug jeweils ein Puffermodul (nicht gezeigt) angeordnet sein, um die Bauteilbahn 215 zwischenzuspeichern oder zu verzögern.

Bei dieser Variante wird die Bauteilbahn 215 dann durch ein Aushärtungsmodul 515 für das Epoxyharz geführt. Dieses Endaushärtungsmodul ist so konfiguriert, dass es die zweiten Bauteile 225, 235 auf die ersten Bauteile 220, 230 setzt, während die Beuteile 220, 225, 230, 235 das Aushärtungsmodul 515 durchlaufen. In einigen Ausführungen befindet sich kein Aushärtungsmodul 515 in der Montagelinie 500.

In der Variante von Fig. 6 wird die Bauteilbahn 215 dann an einem Testmodul 520 vorbeigeführt. In einigen Varianten ist das Testmodul 520 so konfiguriert, dass es prüft, ob die bearbeiteten Bauteile 220, 225, 230, 235 technisch funktionieren, und/oder vollständig ausgehärtet sind, wenn die Bauteile 220, 225, 230, 235 das Testmodul 520 durchlaufen. In einigen Varianten ist das Testmodul 520 so konfiguriert, dass es überprüft, ob alle Bauteile 220, 225, 230, 235 bearbeitet wurden und dass die zweiten Bauteile 225, 235 mit den ersten Bauteilen 220, 230 elektrisch und/oder mechanisch verbunden sind. Das Testmodul 520 kann so konfiguriert sein, dass es auf Fehler oder andere geeignete Parameter der Funktionalität der Bauteile prüft. In einigen Varianten gibt es kein Testmodul 520 in der Montagelinie 500.

Zwischen den Bearbeitungsbereichen der in Fig. 6 gezeigten Vorrichtung sind Pufferbereiche für die Bauteilbahn 215 vorgesehen in Gestalt von durchhängenden Schlaufen der Bauteilbahn 215. Diese durchhängenden Schlaufen der Bauteilbahn 215 gleichen Unterschiede im Bewegungsablauf der Bauteilbahn an den aufeinanderfolgenden Bearbeitungsbereichen aus. Diese Unterschiede sind hervorgerufen durch etwaige unterschiedliche Zeitbedürfnisse der jeweiligen Werkzeuge (i) bei der Bearbeitung an den Bearbeitungsstellen und/oder (ii) beim Wechseln von einer Teilspur zur nächsten.

In der Variante von Fig. 6 gibt es einen Aufwickler 525. Der Aufwickler 525 ist so konfiguriert, dass er die Bauteilbahn 215 mit den bearbeiteten Bauteilen 220, 225, 230, 235 aufspult. Die Ausgabe des fertig bearbeiteten Bandmaterials ist nicht auf einen Aufwickler 525 beschränkt. Es können auch (rechteckige) Felder mit Bauteilen ausgegeben werden, nachdem das fertig bearbeitete Bandmaterials in entsprechende Abschnitte zerteilt wurde.

Die Montagelinie 500 kann auch andere Module oder Einheiten umfassen.

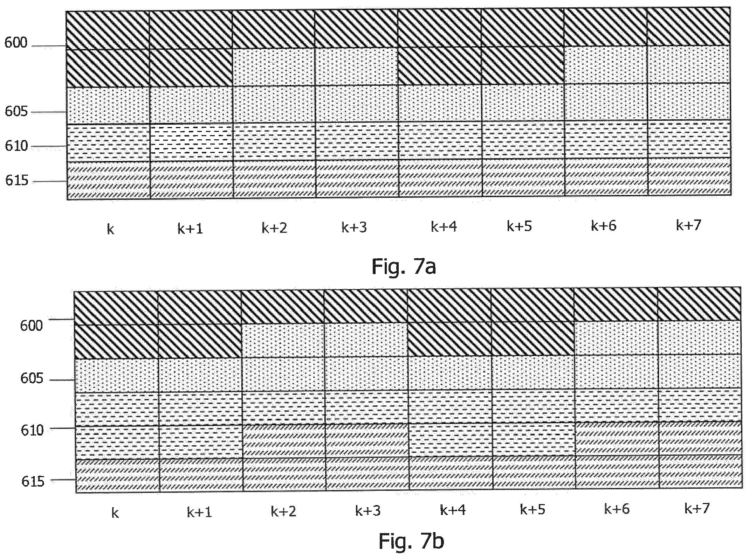

Fig. 7a bis g zeigen schematische Darstellungen verschiedener Verarbeitungsmuster gemäß einigen hier beschriebenen Varianten. Jedes Kästchen entspricht einem zu bearbeitenden ersten Bauteil, wobei gleich schraffierte Kästchen vom selben Werkzeug bearbeitet werden.

Ein sehr hoher Durchsatz der Vorrichtung 10 wird in Varianten erreicht, bei denen alle Werkzeuge 100, 105 im Durchschnitt die gleiche Anzahl p von Bearbeitungsstellen 200, 205, 210 in einem sich wiederholenden Muster bearbeiten. Das optimale Wiederholungsmuster hängt von der Geschwindigkeit der Bewegung des Werkzeugs von Bauteil 220, 230 zu Bauteil 220, 230 in jedem Bearbeitungsbereich 110, 115 ab.

In einigen Varianten ist die Zeit, die das Werkzeug 100, 105 benötigt, um zwischen den Bauteilreihen zu wechseln, und die Zeit, die die nächste Spalte der Bauteile 220, 230 benötigt, um unter dem Werkzeug 100, 105 platziert zu werden, im Wesentlichen gleich. Bei diesen Varianten spielt das Muster der Bewegungsabfolge, das jedes Werkzeug ausführt, eine untergeordnete Rolle. Dagegen ist die Anzahl p der Bearbeitungsstellen 200, 205, 210, die in jedem sich wiederholenden Muster bearbeitet werden, von größerer Bedeutung. In einigen Varianten bearbeitet jedes Werkzeug 100, 105 die gleiche Anzahl p von Bearbeitungsstellen 200, 205, 210 in jedem sich wiederholenden Muster wie die anderen Werkzeuge 100, 105.

In einigen Varianten ist die Zeit, die das Werkzeug 100, 105 benötigt, um zwischen den Bauteilreihen zu wechseln, länger als die Zeit, die die nächste Spalte der Bauteile 220, 230 benötigt, um unter dem Werkzeug 100, 105 platziert zu werden. Bei diesen Varianten enthält die von jedem Werkzeug 100, 105 ausgeführte Abfolge der Bewegungen so wenige Bewegungen zwischen den Bauteilreihen wie möglich.

Bei einigen Varianten ist die Zeit, die das Werkzeug 100, 105 benötigt, um zwischen den Teilreihen zu wechseln, geringer als die Zeit, die die nächste Spalte der Teile 220, 230 benötigt, um unter dem Werkzeug 100, 105 platziert zu werden, enthält die von jedem Werkzeug 100, 105 ausgeführte Abfolge der Bewegungen so wenige Bewegungen zwischen den Bauteilspalten wie möglich.

In der Variante von Fig. 7a gibt es vier Werkzeuge 100, 105, fünf Reihen von ersten Bauteilen 220, 230 auf der Bauteilbahn 215, fünf Teilspuren 305, 310, 315 und fünf Bearbeitungsstellen 200, 205, 210 pro Bearbeitungsbereich 110. Die Werkzeuge können nicht an eine gemeinsame Bearbeitungsstelle springen. Jedes Muster 600, 605, 610, 615 in Fig. 7a entspricht einem Werkzeug, d.h. das obere Muster 600 entspricht einem Werkzeug, das zweite Muster 605 entspricht einem zweiten Werkzeug und so weiter. In dieser Variante teilen sich die Werkzeuge 100, 105, die den zwei oberen Mustern 600, 605 zugeordnet sind, drei Bearbeitungsstellen 200, 205, 210 und drei Teilspuren 305, 310, 315. Es ist auch zu erkennen, dass sich die Werkzeuge 100, 105 eine Teilspur teilen und einzeln auf je einer Teilspur arbeiten. Jedes der Werkzeuge überträgt in seinem Bearbeitungsbereich an zwei Bearbeitungsstellen ein zweites Bauteil auf ein erstes Bauteil.

In einigen Varianten ist die gemeinsame Teilspur nicht die mittlere Teilspur 310, sondern eine der äußeren Teilspuren 305, 315. Diese Variante erlaubt nicht, dass die Werkzeuge 100, 105, die den zwei unteren Mustern 610, 615 zugeordnet sind, mit ihrer maximalen Effizienz arbeiten, da sie auf die Werkzeuge warten müssen, die den oberen beiden Mustern 600, 605 zugeordnet sind, um die gemeinsame Nutzung der Teilspur abzuschließen.

In der Variante von Fig. 7b gibt es vier Werkzeuge 100, 105, sechs Reihen von ersten Bauteilen 220, 230 auf der Bauteilbahn 215, sechs Teilspuren 305, 310, 315 und sechs Bearbeitungsstellen 200, 205, 210 pro Bearbeitungsbereich 110. Es ist zu erkennen, dass sich die zwei oberen Mustern 600, 605 drei Teilspuren 305, 310, 315 und die zwei unteren Mustern 610, 615 weitere drei Teilspuren teilen. Diese Zuordnung für die gemeinsame Nutzung ist von Teilspuren am effizientesten. In dieser Variante bearbeitet das erste Werkzeug 100 in jedem Paar zwei Bauteile in der gemeinsamen Teilspur in den Spalten k und k+1. Darauf folgt das zweite Werkzeug 105, das die folgenden zwei Bauteile 220, 225, 230, 235 in der gemeinsamen Teilspur in den Spalten k+2 und k+3 bearbeitet. Ein Paar sind hier zwei Werkzeuge, die zusammenwirken, um drei Reihen von Antennen zu bearbeiten. Zum Beispiel sind in Abbildung 7b die Werkzeuge mit den Mustern 600 und 605 ein Paar und die Werkzeuge mit den Mustern 610 und 615 ein zweites Paar.

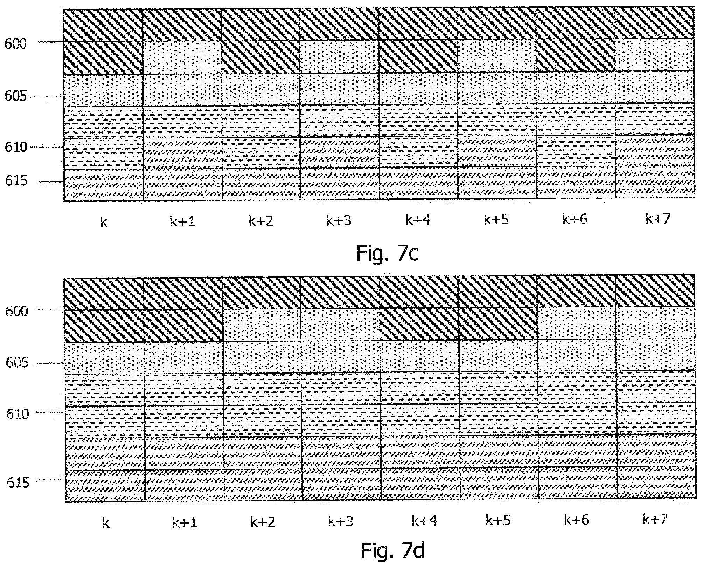

In der Variante von Fig. 7c gibt es vier Werkzeuge 100, 105, sechs Reihen von Bauteilen 220, 225, 230, 235 auf der Bauteilbahn 215, sechs Teilspuren 305, 310, 315 und sechs Bearbeitungsstellen 200, 205, 210 pro Bearbeitungsbereich 110. Der Prozess von Fig. 7c ist ähnlich wie der von Fig. 7b. Allerdings bearbeiten das erste Werkzeug 100 und das zweite Werkzeug 105 in jedem Paar abwechseln Bauteile 220, 225, 230, 235 in der gemeinsamen Teilspur. Das erste Werkzeug 100 bearbeitet die gemeinsame Teilspur in den Spalten k und k+2, während das zweite Werkzeug 105 die gemeinsame Teilspur in den Spalten k+1 und k+3 bearbeitet.

In einigen Varianten bearbeiten die Werkzeuge 100, 105 jeweils mehr als zwei aufeinander folgende Bauteile 220, 225, 230, 235 in der gemeinsamen Teilspur. In einigen Varianten wird die gemeinsame Teilspur ungleichmäßig zwischen den beiden Werkzeugen 100, 105 geteilt. Beispielsweise bearbeitet das erste Werkzeug 100 ein Bauteil 220, 225, 230, 235 in der gemeinsamen Teilspur, gefolgt vom zweiten Werkzeug 105, das die beiden nachfolgenden Bauteile 220, 225, 230, 235 in der gemeinsamen Teilspur bearbeitet. Hierbei handelt es sich nur um Beispiele. Die gemeinsame Teilspur kann von den Werkzeugen 100, 105 auch in anderer Weise gemeinsam bearbeitet werden.

In der Variante von Fig. 7d gibt es vier Werkzeuge 100, 105, sieben Reihen von Bauteilen 220, 225, 230, 235 auf der Bauteilbahn 215, sieben Teilspuren 305, 310, 315 und sieben Bearbeitungsstellen 200, 205, 210 pro Bearbeitungsbereich 110. Bei dieser Variante ist ersichtlich, dass das Werkzeug 100, 105, das dem unteren Muster 615 zugeordnet ist, das einzige Werkzeug 100, 105 ist, das diese beiden Teilspuren bearbeitet. Diese Variante erlaubt nicht, dass die Werkzeuge 100, 105, die den zwei oberen Mustern 600, 605 zugeordnet sind, mit ihrer maximalen Effizienz arbeiten, da sie auf die Werkzeuge 100, 105 warten müssen, die den zwei unteren Mustern 610, 615 zugeordnet sind.

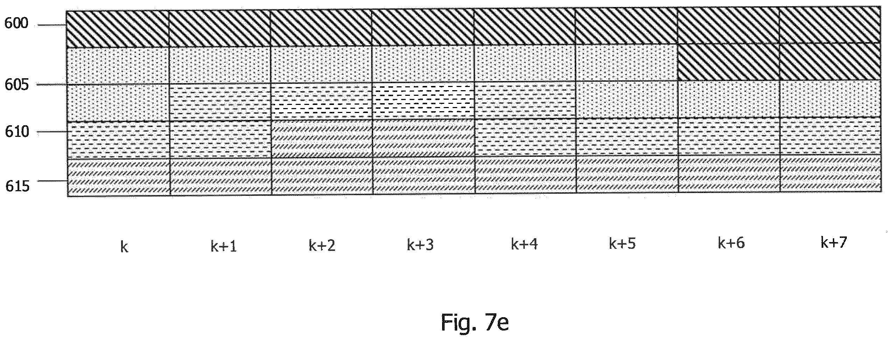

In der Variante der Fig. 7e gibt es vier Werkzeuge 100, 105, fünf Reihen von Bauteilen 220, 225, 230, 235 auf der Bauteilbahn 215, fünf Teilspuren 305, 310, 315 und fünf Bearbeitungsstellen 200, 205, 210. Bei dieser Variante wiederholt jedes Werkzeug 100, 105 sein jeweiliges Muster 600, 605, 610, 615 alle acht Spalten und führt die gleiche Anzahl von Bewegungen zwischen Teilspuren 305, 310, 315 ausführen. Dies führt zu einer gleichmäßigen Auslastung aller Werkzeuge 100, 105 bei minimaler Bewegung zwischen den Bauteilreihen. Dieses Muster ist besonders für Varianten vorzuziehen, bei denen die Zeit, die jedes Werkzeug 100, 105 benötigt, um sich zwischen Bauteilreihen zu bewegen, größer oder im Wesentlichen gleich der Zeit ist, die die nächste Spalte von Bauteilen 220, 230 benötigt, um unter jedem Werkzeug 100, 105 platziert zu werden.

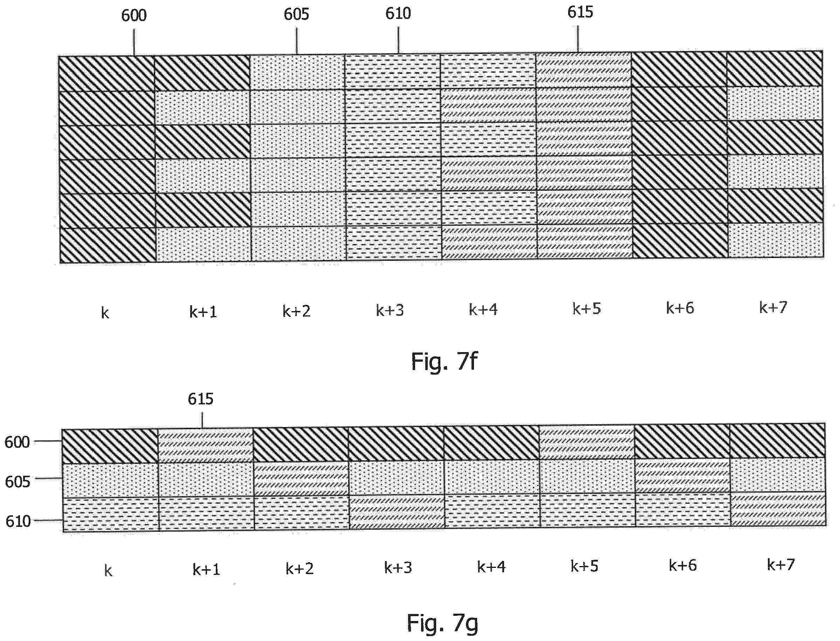

In der Variante von Fig. 7f gibt es vier Werkzeuge 100, 105, sechs Reihen von Bauteilen 220, 225, 230, 235 auf der Bauteilbahn 215, acht Teilspuren 305, 310, 315 und sechs Bearbeitungsstellen 200, 205, 210. In dieser Variante teilen sich die Werkzeuge 100, 105 Spalten anstelle von Reihen / Teilspuren. Dies wird erreicht, indem die Ausrichtung der Teilspuren 305, 310, 315 so geändert wird, dass die Teilspuren 305, 310, 315 orthogonal zur Bewegung der Teilspur 215 verlaufen. Das gezeigte Beispiel hat acht Teilspuren 305, 310, 315, aber die Anzahl der Teilspuren 305, 310, 315 ändert sich in Abhängigkeit von der Anzahl der Spalten der Bauteile 220, 225, 230, 235. Die Vorrichtung 10 für dieses Layout entspricht dem der vorherigen Layouts. Die Anzahl der Bauteile 220, 225, 230, 235, die in einer Spalte von jedem Werkzeug 100, 105 bearbeitet werden, kann auf der Grundlage der Anzahl der Bauteile und der Anzahl der Reihen von Bauteilen relativ zur Bauteilbahn 215 geändert werden. Dieses Muster ist besonders bei Varianten vorzuziehen, bei denen die Zeit, die jedes Werkzeug 100, 105 benötigt, um sich zwischen Bauteilreihen zu bewegen, geringer ist als die Zeit, die benötigt wird, um die nächste Spalte von Bauteilen 220, 230 unter jedem Werkzeug 100, 105 zu platzieren.

In der Variante von Fig. 7g gibt es vier Werkzeuge 100, 105, drei Reihen von Bauteilen 220, 225, 230, 235 auf der Bauteilbahn 215, drei Teilspuren 305, 310, 315 und drei Bearbeitungsstellen 200, 205, 210. In diesem Beispiel gibt es mehr Werkzeuge 100, 105 als Teilspuren 305, 310, 315 und Bearbeitungsstellen 200, 205, 210. Die Werkzeuge 100, 105, denen die Muster 600, 605, 610 zugeordnet sind, bearbeiten den Großteil jeder Teilspur 305, 310, 315. Dabei, lassen diese Werkzeuge periodisch eine Bearbeitungsstelle 200, 205, 210 aus. Diese ausgelassende Bearbeitungsstelle 200, 205, 210 wird dann von dem Werkzeug 100, 105 bearbeitet, dem das vierte Muster 615 zugeordnet ist. Dies kann je nach Bauteilbahn 215 und den zugehörigen Bauteilen 220, 225, 230, 235 eine effizientere Vorrichtung 10 ermöglichen. Die Anzahl der Werkzeuge 100, 105 und ihre jeweiligen Bewegungsmuster 600, 605, 610, 615 können je nach Anzahl der Teilspuren 305, 310, 315 und Bearbeitungsstellen 200, 205, 210 geändert werden.

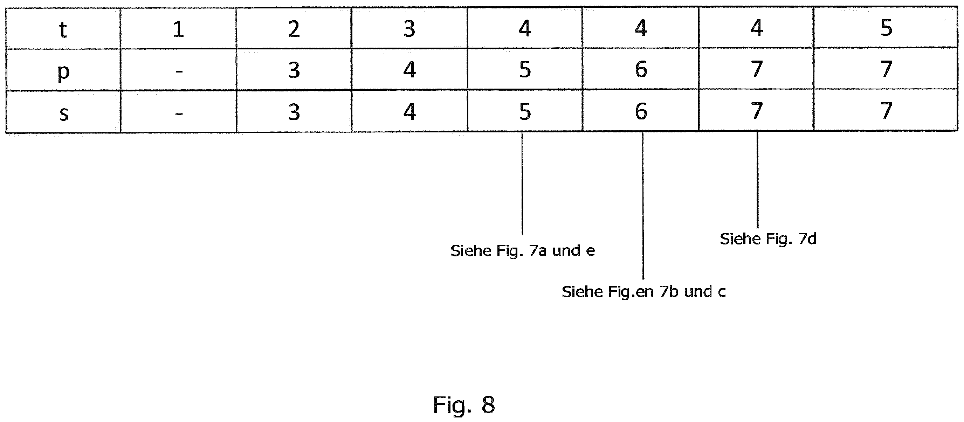

Fig. 8 zeigt eine Tabelle mit der Gesamtzahl der Werkzeuge, Bearbeitungsstellen und Teilspuren gemäß einigen hier beschriebenen Varianten.

Fig. 8 zeigt eine Tabelle mit verschiedenen Varianten der Vorrichtung, wobei t die Gesamtzahl der Werkzeuge in der Vorrichtung 10 ist, p eine Anzahl von Bearbeitungsstellen 200, 205, 210 in jedem der Bearbeitungsbereiche 110, 115 und s die Anzahl der Teilspuren 305, 310, 315 auf der Spur 300. Solange $t < p$ und die Anzahl s der Teilspuren 305, 310, 315 der Anzahl p der Bearbeitungsstellen 200, 205, 210 entspricht, können diese Werte in Abhängigkeit von der Bauteilbahn 215 geändert werden. In einigen Varianten gilt $t < p \leq \text{floor} 1,5t$. In einigen weiteren Varianten gilt außerdem $p = 1,5t$.

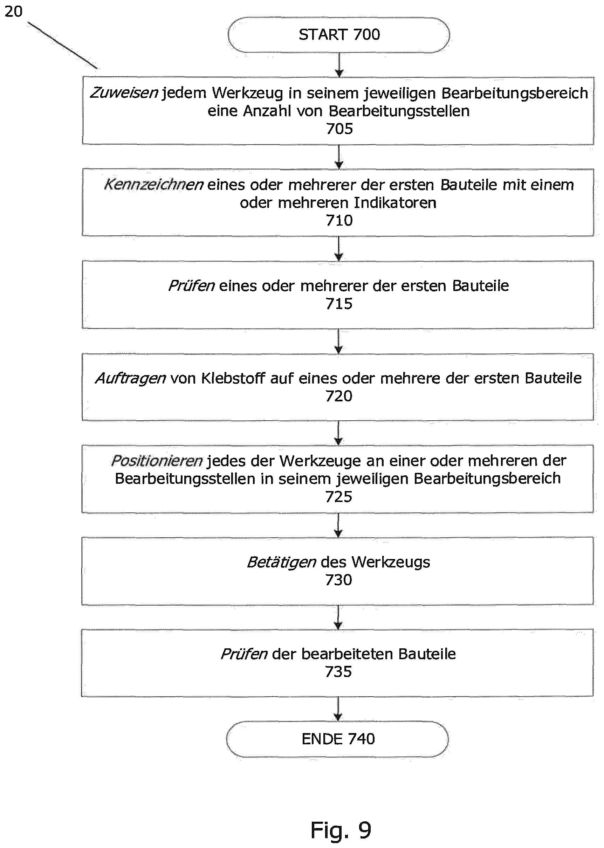

Fig. 9 zeigt ein Flussdiagramm des Verfahrens gemäß einer hier beschriebenen Variante.

In der Variante von Fig. 9 wird jedem Werkzeug 100, 105 in seinem jeweiligen Bearbeitungsbereich 110, 115 eine Anzahl p von Bearbeitungsstellen 200, 205, 210 zugewiesen - Schritt 705. In einigen Varianten ordnet die Steuereinheit 400, 405 jedes Werkzeugs 100, 105 die Bearbeitungsstellen 200, 205, 210 zu. In einigen Varianten weist die Hauptsteuereinheit 410 die Bearbeitungsstellen 200, 205, 210 jedem Werkzeugs 100, 105 zu.

In dieser Variante werden dann eines oder mehrere der ersten Bauteile 220, 230 mit einem oder mehreren Indikatoren gekennzeichnet - Schritt 710. In einigen Varianten wird dieses Markieren 710 von der Markierungseinheit 125 vorgenommen. In einigen Varianten steuert die Hauptsteuereinheit 410 dieses Markieren 710 der ersten Bauteile 220, 230. In einigen Ausführungen markiert 710 die Markierungseinheit 125 die ersten Bauteile 220, 230 und sendet dies betreffende Information an die Hauptsteuereinheit 410. In einigen Varianten wird dieses Markieren der ersten Bauteile 220, 230 durch die Steuereinheiten 400, 405 jedes Werkzeugs 100, 105 gesteuert. In einigen Varianten ist dieses Markieren der ersten Bauteile 220, 230 unabhängig von der Hauptsteuereinheit 410 und den Steuereinheiten 400, 405. In einigen Varianten werden die zweiten Bauteile 225, 235 markiert.

In dieser Variante werden dann eines oder mehrere der ersten Bauteile 220, 230 von einer Inspektionseinheit 415, 425 geprüft - Schritt 715. Die Inspektionseinheit 415, 425 inspiziert 715 die Bauteile 220, 225, 230, 235, um zu prüfen, ob die Bauteile 220, 225, 230, 235 bearbeitet wurden oder nicht. Die Inspektionseinheit 415, 425 sendet diese Information dann an ihre jeweilige Steuereinheit 400, 405 und/oder die Hauptssteuereinheit 410. Die Inspektionseinheit 415, 425 kann die Bauteile 220, 225, 230, 235 mit optischen Mitteln wie einer Kamera inspizieren.

In dieser Variante wird dann über die Klebstoffauftragseinheit 130 Klebstoff auf eines oder mehrere der ersten Bauteile 220, 230 aufgetragen - Schritt 720. Die Klebstoffauftragseinheit 130 kann von der Hauptssteuereinheit 410 oder einer Steuereinheit 400, 405 Anweisungen erhalten, auf welche ersten Bauteile 220, 230 Klebstoff aufgetragen werden soll. In einigen Varianten ist die Klebstoffauftragseinheit 130 unabhängig von der Hauptsteuereinheit 410 und den Steuereinheiten 400, 405.

Bei dieser Ausführung wird jedes der Werkzeuge 100, 105 durch die Steuereinheit 400, 405 des genannten Werkzeugs 100, 105 an einer oder mehreren der Bearbeitungsstellen 200, 205, 210 in seinem jeweiligen Bearbeitungsbereich 110, 115 positioniert - Schritt 725. Das Werkzeug 100, 105 wird dann durch die Steuereinheit 400, 405 betätigt - Schritt 730, um eines oder mehrere der Bauteile 220, 225, 230, 235 zu bearbeiten.

In dieser Variante wird ein weiteres der bearbeiteten Bauteile 220, 225, 230, 235 von einer Inspektionseinheit 420, 430 geprüft - Schritt 735, um zu kontrollieren, ob die Bauteile 220, 225, 230, 235 korrekt bearbeitet wurden. Bei einigen Varianten prüft die Inspektionseinheit 420, 430, ob die Platzierung des zweiten Bauteils 225, 235 korrekt ist. In einigen Varianten sendet die Inspektionseinheit 420, 430 dies betreffende Information dann an ihre jeweilige Steuereinheit 400, 405. In einigen Varianten sendet die Steuereinheit 400, 405 diese Information auch an die Hauptsteuereinheit 410. In einigen Varianten kann die Hauptsteuereinheit 410 die Steuereinheit 400, 405 eines nachfolgenden Werkzeugs 100, 105 übersteuern und sie so steuern, dass sie ein fehlendes Bauteil 220, 225, 230, 235 bearbeitet. In einigen Varianten kann die Hauptsteuereinheit 410 einen Alarm auslösen oder eine visuelle Benachrichtigung an einen Bediener senden, um anzuzeigen, dass ein Bauteil 220, 225, 230, 235 vom Werkzeug 100, 105 verfehlt wurde. In einigen Varianten erfolgt das Auslösen eines Alarms oder das Senden einer visuellen Benachrichtigung, wenn die Platzierung des zweiten Bauteils 225, 235 unbefriedigend ist. Die Inspektionseinheit 420, 430 kann diese Information durch optische Mittel wie eine Kamera erhalten.

In einigen Varianten wird der Transport der Bauteilbahn 215 von der Hauptsteuereinheit 410 gesteuert. Die Transportfunktion 120 kann die Bauteilbahn 215 in Abhängigkeit von der gewünschten Bewegung entweder kontinuierlich oder intermittierend fördern. In einigen Beispielen ist die Transportfunktion 120 unabhängig von der Hauptsteuereinheit 410.

In einigen Varianten wird Epoxyharz auf eines oder mehrere der bearbeiteten Bauteile 220, 225, 230, 235 aufgetragen. In einigen Ausführungen wird diese Anwendung von der Hauptsteuereinheit 410 gesteuert. In einigen Varianten wird diese Anwendung von einer oder mehreren Steuereinheiten 400, 405 gesteuert. Bei einigen Ausführungen sendet die Hauptsteuereinheit 410 oder die Steuereinheiten 400, 405 Informationen an die Epoxyharzauftragseinheit, welche bearbeiteten Bauteile mit Epoxyharz beschichtet werden müssen. Bei einigen Ausführungen ist die Epoxyharzauftragseinheit unabhängig von der Hauptsteuereinheit 410 und den Steuereinheiten 400, 405.

Das Verfahren 20 kann einige oder alle der oben genannten Schritte umfassen. Die oben genannten Schritte können in einer anderen Reihenfolge als der in Fig. 9 dargestellten ausgeführt werden; einige der Schritte können gleichzeitig ausgeführt werden.

**Patentansprüche**

1. Eine Vorrichtung (10) zum Betreiben von mindestens zwei Werkzeugen (100, 105) in einem ersten (110) und mindestens einem zweiten (115) Bearbeitungsbereich, wobei

   - in jedem Bearbeitungsbereich (110, 115) dem jeweiligen Werkzeug (100, 105) eine Anzahl (p) von Bearbeitungsstellen (200, 205, 210) zugeordnet ist, durch die von einer Bauteilbahn (215) getragene erste Bauteile (220) entlang einer Spur (300) durch den ersten (110) und den mindestens zweiten (115) Bearbeitungsbereich gefördert werden, wobei

- die Gesamtzahl (t) der Werkzeuge in der Vorrichtung (10) geringer ist als die Anzahl (p) der Bearbeitungsstellen (200, 205, 210) in jedem Bearbeitungsbereich (110, 115), wobei
- die Spur (300) eine Anzahl (s) von Teilspuren (305, 310, 315) umfasst, die der Anzahl (p) der Bearbeitungsstellen (200, 205, 210) entspricht, wobei
- das Werkzeug (100, 105) jedes Bearbeitungsbereichs (110, 115) so konfiguriert ist, dass es an jeder zugeordneten Bearbeitungsstelle (200, 205, 210) in seinem Bearbeitungsbereich (110, 115) jeweilige zweite Bauteile (225) an jeweilige erste Bauteile (220) anbringt, wobei das Werkzeug (100) einen Bauteilvorrat für die zweiten Bauteile (225) und eine Aufnahme für den Bauteilvorrat umfasst und wobei die Vorrichtung (10) umfasst:

eine Steuereinheit (400, 405), die so konfiguriert ist, dass sie in Abhängigkeit von einer Förderbewegung der Bauteilbahn (215) entlang der Spur (300),

(i) das Werkzeug (100, 105) und die zugehörige Aufnahme an einer oder mehreren der Bearbeitungsstellen (200, 205, 210) in seinem Bearbeitungsbereich (110, 115) positioniert, wobei das Werkzeug eine Nadel oder einen Laser aufweist, und wobei die Positionierung das Bewegen der Aufnahme in mindestens einer von einer x-Richtung, einer y-Richtung und einer Drehrichtung umfasst und
(ii) das Werkzeug (100, 105) zum Montieren eines ersten (220) oder zweiten (225) Bauteils an der jeweiligen Bearbeitungsstelle (200, 205, 210) so betätigt, dass

- in dem ersten Bereich (110),

(i) ausgewählte ersten Bauteile (220), die auf der Bauteilbahn (215) entlang einer ersten Teilspur (305) befördert werden, und
(ii) ausgewählte erste Bauteile (220), die auf der Bauteilbahn (215) entlang einer zweiten Teilspur (310) befördert werden,

durch das Werkzeug (100) des ersten Bereichs (110) bearbeitet werden, und
- in dem zweiten Bereich (115),

(i) ausgewählte ersten Bauteile (220), die auf der Bauteilbahn (215) entlang einer dritten Teilspur (315) befördert werden, und

(ii) die ersten Bauteile (220), die auf der Bauteilbahn (215) entlang der zweiten Teilspur (310) befördert, und in dem ersten Bereich (110) nicht bearbeitet werden, durch das Werkzeug (105) des zweiten Bereichs (115)) bearbeitet werden.

2. Die Vorrichtung (10) nach Anspruch 1, wobei die zweite Teilspur (310) sowohl an die erste Teilspur (305) als auch an die dritte Teilspur (315) angrenzt.

3. Die Vorrichtung (10) nach Anspruch 1 oder 2, bei der die Bauteilbahn (215), die entlang der Spur (300) durch den ersten (110) und den mindestens zweiten (115) Bearbeitungsbereich befördert wird, intermittierend oder kontinuierlich durch eine Transportfunktion (120) befördert wird.

4. Die Vorrichtung (10) eines beliebigen vorangehenden Anspruchs, wobei die Steuereinheit (400, 405) jedes Bearbeitungsbereichs (110, 115) mit einer Hauptsteuereinheit (410) gekoppelt ist.

5. Die Vorrichtung (10) eines beliebigen vorangehenden Anspruchs, wobei die Gesamtzahl (t) der Werkzeuge in der Vorrichtung (10) und die Anzahl (p) der Bearbeitungsstellen (200, 205, 210) in jedem Bearbeitungsbereich (110, 115) der mathematischen Beziehung gehorchen: $t < p < floor(1,5t)$.

6. Die Vorrichtung (10) eines beliebigen vorangehenden Anspruchs, wobei sich das Werkzeug (105) des ersten Bearbeitungsbereichs (110) in Abhängigkeit von dem Werkzeug (105) des zweiten Bearbeitungsbereichs (115) bewegt.

7. Die Vorrichtung (10) eines beliebigen vorangehenden Anspruchs, wobei die Steuereinheit (400, 405) ferner so konfiguriert ist, dass sie die Werkzeuge (100, 105) so betreibt, dass das Werkzeug (100) des ersten Bearbeitungsbereichs (110) b erste Bauteile (220) der zweiten Teilspur (310) bearbeitet und das Werkzeug (105) des zweiten Bearbeitungsbereichs (115) nachfolgende b erste Bauteile (220) der zweiten Teilspur (310) bearbeitet, und wobei b eine ganze Zahl ist.

8. Die Vorrichtung (10) nach einem der Ansprüche 1 bis 6, wobei die Steuereinheit (400, 405) ferner so konfiguriert ist, dass sie die Werkzeuge (100, 105) so betreibt, dass das Werkzeug (100) des ersten Bearbeitungsbereichs (110) b erste Bauteile (220) der zweiten Teilspur (310) bearbeitet und das Werkzeug (105) des zweiten Bearbeitungsbereichs (115) nachfolgende c erste Bauteile (220) der zweiten Teilspur (310) bearbeitet, wobei b und c ganze Zahlen sind, und wobei b≠c.

9. Die Vorrichtung (10) eines beliebigen vorangehenden Anspruchs, wobei die Anzahl (s) der Teilspuren (305, 310, 315) ein ganzzahliger Faktor der Anzahl (p) der Bearbeitungsstellen (200, 205, 210) ist.

10. Die Vorrichtung (10) eines beliebigen vorangehenden Anspruchs, wobei die Steuereinheit (400, 405) ferner so konfiguriert ist, dass sie Informationen darüber erhält, ob das erste Bauteil (220), das auf der Bauteilbahn (215) entlang der zweiten Teilspur (310) befördert wird, bearbeitet wurde oder nicht.

11. Die Vorrichtung (10) nach Anspruch 3 oder nach einem der Ansprüche 4 bis 10, wenn sie von Anspruch 3 abhängig ist, wobei die Anzahl der jedem Werkzeug (100, 105) in seinem jeweiligen Bearbeitungsbereich (110, 105) zugewiesenen Bearbeitungsstellen (200, 205, 210) von der Zeit abhängen, die das Werkzeug (100) benötigt, um sich zwischen den Bearbeitungsstellen (200, 205, 210) zu bewegen, sowie ggf. von der Förderung der Bauteilbahn (215) durch den Bearbeitungsbereich (110, 115).

12. Ein Verfahren (20) zum Betreiben von mindestens zwei Werkzeugen (100, 105) in einem ersten (110) und mindestens einem zweiten (115) Bearbeitungsbereich, mit dem Schritt

    - Zuweisen (705) des jeweiligen Werkzeugs in jedem Bearbeitungsbereich (110, 115) einer Anzahl (p) von Bearbeitungsstellen (200, 205, 210), durch die erste Bauteile (220, die von einer Bauteilbahn (215) getragen werden, entlang einer Spur (300) durch den ersten (110) und den mindestens zweiten (115) Bearbeitungsbereich befördert werden, wobei
    - die Gesamtzahl (t) der Werkzeuge geringer ist als die Anzahl (p) der Bearbeitungsstellen (200, 205, 210) in jedem Bearbeitungsbereich (110, 115), wobei
    - die Spur (300) eine Anzahl (s) von Teilspuren (305, 310, 315) umfasst, die der Anzahl (p) der Bearbeitungsstellen (200, 205, 210) entspricht, und den Schritten
    - Konfigurieren des Werkzeugs (100, 105), um an jeder zugeordneten Bearbeitungsstelle (200, 205, 210) in seinem Bearbeitungsbereich (110, 115) jeweils zweite Bauteile (225) an jeweils erste Bauteile (220) zu montieren, wobei das Werkzeug (100, 105) einen Bauteilvorrat für die zweiten Bauteile (225) und eine Aufnahme für den Bauteilvorrat umfasst;
Konfigurieren einer Steuereinheit (400, 405), um in Abhängigkeit von einer Förderbewegung der Bauteilbahn (215) entlang der Spur (300),

      (i) das Werkzeug (100, 105) an einer oder mehreren der Bearbeitungsstellen (200, 205, 210) in seinem Bearbeitungsbereich (110, 115) zu positionieren (725), wobei das Werkzeug eine Nadel oder einen Laser aufweist, und wobei die zugehörige Aufnahme in mindestens einer von einer x-Richtung, einer y-Richtung und einer Drehrichtung positioniert ist und
      (ii) das Werkzeug (100, 105) zum Montieren eines ersten (220) oder zweiten (225) Bauteils an der jeweiligen Bearbeitungsstelle (200, 205, 210) zu betätigen (730), so dass

- in dem ersten Bereich (110),

      (i) ausgewählte ersten Bauteile (220), die auf der Bauteilbahn (215) entlang einer ersten Teilspur (305) befördert werden, und
      (ii) ausgewählte erste Bauteile (220), die auf der Bauteilbahn (215) entlang einer zweiten Teilspur (310) befördert werden, durch das Werkzeug (100) des ersten Bereichs (110) bearbeitet werden, und

- in dem zweiten Bereich (115),

      (i) ausgewählte ersten Bauteile (220), die auf der Bauteilbahn (215) entlang einer dritten Teilbahn (315) befördert werden, und
      (ii) die ersten Bauteile (220), die auf der Bauteilbahn (215) entlang der zweiten Teilbahn (310) befördert und in dem ersten Bereich (110) nicht bearbeitet werden,

durch das Werkzeug (105) des zweiten Bereichs (115) bearbeitet werden.

13. Das Verfahren (20) nach Anspruch 12, wobei die zweite Teilspur (310) sowohl an die erste Teilspur (305) als auch an die dritte Teilspur (315) angrenzt.

14. Eine Vorrichtung (10) zum Betreiben von mindestens zwei Werkzeugen (100, 105) in einem ersten (110) und mindestens einem zweiten (115) Bearbeitungsbereich, wobei

    - in jedem Bearbeitungsbereich (110, 115) dem jeweiligen Werkzeug (100, 105) eine Anzahl (p) von Bearbeitungsstellen (200, 205, 210) zugeordnet ist, durch die von einer Bauteilbahn (215) getragene erste Bauteile (220) entlang einer Spur (300) durch den ersten (110) und den mindestens zweiten (115) Bearbeitungsbereich gefördert werden, wobei
    - die Gesamtzahl (t) der Werkzeuge in der Vorrichtung (10) größer ist als die Anzahl (p) der Bearbeitungsstellen (200, 205, 210) in jedem Bearbeitungsbereich (110, 115), wobei
    - die Spur (300) eine Anzahl (s) von Teilspuren (305, 310, 315) umfasst, die der Anzahl (p) der Bearbeitungsstellen (200, 205, 210) entspricht, wobei

- das Werkzeug (100, 105) jedes Bearbeitungsbereichs (110, 115) so konfiguriert ist, dass es an jeder zugeordneten Bearbeitungsstelle (200, 205, 210) in seinem Bearbeitungsbereich (110, 115) jeweilige zweite Bauteile (225) an jeweilige erste Bauteile (220) anbringt, wobei das Werkzeug (100, 105) einen Bauteilvorrat für die zweiten Bauteile (225) und eine Aufnahme für den Bauteilvorrat umfasst, und wobei die Vorrichtung (10) umfasst:

eine Steuereinheit (400, 405), die so konfiguriert ist, dass sie in Abhängigkeit von einer Förderbewegung der Bauteilbahn (215) entlang der Spur (300),

(i) das Werkzeug (100, 105) und die zugehörige Aufnahme an einer oder mehreren der Bearbeitungsstellen (200, 205, 210) in seinem Bearbeitungsbereich (110, 115) positioniert, wobei das Werkzeug eine Nadel oder einen Laser aufweist, und wobei die Positionierung das Bewegen der Aufnahme in mindestens einer von einer x-Richtung, einer y-Richtung und einer Drehrichtung umfasst und

(ii) das Werkzeug (100, 105) zum Montieren eines ersten (220) oder zweiten (225) Bauteils an der jeweiligen Bearbeitungsstelle (200, 205, 210) so betätigt, dass

- in dem ersten Bereich (110),

(i) ausgewählte erste Bauteile (220), die auf der Bauteilbahn (215) entlang einer ersten Teilspur (305) befördert werden, und
(ii) ausgewählte erste Bauteile (220), die auf der Bauteilbahn (215) entlang einer zweiten Teilspur (310) befördert werden,

durch das Werkzeug (100) des ersten Bereichs (110) bearbeitet werden, und
- in dem zweiten Bereich (115),

(i) ausgewählte ersten Bauteile (220), die auf der Bauteilbahn (215) entlang einer dritten Teilspur (315) befördert werden, und
(ii) die ersten Bauteile (220), die auf der Bauteilbahn (215) entlang der zweiten Teilspur (310) befördert, und in dem ersten Bereich (110) nicht bearbeitet werden, durch das Werkzeug (105) des zweiten Bereichs (115)) bearbeitet werden.

15. Die Vorrichtung (10) nach Anspruch 14, wobei die zweite Teilspur (310) sowohl an die erste Teilspur (305) als auch an die dritte Teilspur (315) angrenzt.

**Claims**

1. An apparatus (10) for operating at least two tools (100, 105) in a first (110) and at least a second (115) processing area, wherein

- in each processing area (110, 115) a number (p) of machining locations (200, 205, 210) is assigned to the respective tool (100, 105), by means of which first components (220) carried by a component web (215) are conveyed along a track (300) through the first (110) and the at least second (115) processing area, wherein
- the total number (t) of tools in the apparatus (10) is less than the number (p) of machining locations (200, 205, 210) in each processing area (110, 115), wherein
- the track (300) comprises a number (s) of partial tracks (305, 310, 315) which corresponds to the number (p) of machining locations (200, 205, 210), wherein
- the tool (100, 105) of each processing area (110, 115) is adapted to couple respective second components (225) to respective first components (220) at each associated machining location (200, 205, 210) in its processing area (110, 115), wherein the tool (100) comprises a component supply for the second components (225) and a receptacle for the component supply, and wherein the apparatus (10) comprises a control unit (400, 405) adapted, in response to a conveying movement of the component web (215) along the track (300), and to

(i) position the tool (100, 105) and the associated receptacle at one or more of the machining locations (200, 205, 210) in its processing area (110, 115), wherein the tool has a needle or a laser, and wherein the positioning comprises moving the receptacle in at least one of an x-direction, a y-direction and a rotational direction, and
(ii) actuate the tool (100, 105) to mount a first (220) or second (225) component at the respective machining location (200, 205, 210) such that

- in the first area (110),

(i) selected first components (220) conveyed along a first partial path (305) on the component track (215), and
(ii) selected first components (220) conveyed along a second partial path (310) on the component track (215), are machined by the tool (100) of the first area (110), and

- in the second area (115),

(i) selected first components (220) conveyed along a third partial path (315) on the component track (215), and
(ii) the first components (220) that are conveyed on the component web (215) along the second partial path (310) and are not machined in the first area (110), are machined by the tool (105) of the second area (115).

2. The apparatus (10) of claim 1, wherein the second partial path (310) is adjacent to both the first partial path (305) and the third partial path (315).

3. The apparatus (10) according to claim 1 or 2, wherein the component web (215) conveyed along the track (300) through the first (110) and the at least second (115) processing area, is intermittently or continuously conveyed through a transport function (120).

4. The apparatus (10) of any preceding claim, wherein the control unit (400, 405) of each processing area (110, 115) is coupled to a main control unit (410).

5. The apparatus (10) of any preceding claim, wherein the total number (t) of tools in the apparatus (10) and the number (p) of machining locations (200, 205, 210) in each processing area (110, 115) obey the mathematical relationship:

$$t < p \leq \text{floor}(1,5t).$$

6. The apparatus (10) of any preceding claim, wherein the tool (105) of the first processing area (110) moves in response to the tool (105) of the second processing area (115).

7. The apparatus (10) of any preceding claim, wherein the control unit (400, 405) is further adapted to operate the tools (100, 105) such that the tool (100) of the first processing area (110) machines b first components (220) of the second partial path (310) and the tool (105) of the second processing area (115) machines subsequent b first components (220) of the second partial path (310), and wherein b is an integer.

8. The apparatus (10) according to any one of claims 1 to 6, wherein the control unit (400, 405) is further adapted to operate the tools (100, 105) such that the tool (100) of the first processing area (110) machines b first components (220) of the second partial path (310) and the tool (105) of the second processing area (115) subsequently machines c first components (220) of the second partial path (310), wherein b and c are integers, and wherein b≠c.

9. The apparatus (10) of any preceding claim, wherein the number (s) of partial paths (305, 310, 315) is an integer factor of the number (p) of machining locations (200, 205, 210).

10. The apparatus (10) of any preceding claim, wherein the control unit (400, 405) is further configured to receive information about whether or not the first component (220) being conveyed on the component track (215) along the second part track (310) has been processed.

11. The apparatus (10) according to claim 3 or according to any one of claims 4 to 10 when dependent on claim 3, wherein the number of machining locations (200, 205, 210) assigned to each tool (100, 105) in its respective processing area (110, 105) depends on the time required for the tool (100) to move between the machining locations (200, 205, 210) and, if necessary, on the conveyance of the component web (215) through the processing area (110, 115).

12. A method (20) of operating at least two tools (100, 105) in a first (110) and at least a second (115) processing area, comprising the step of

- allocating (705) the respective tool in each processing area (110, 115) a number (p) of machining locations (200, 205, 210) by which first components (220) carried by a component track (215) are conveyed along a track (300) through the first (110) and the at least second (115) processing area, wherein
- the total number (t) of tools is less than the number (p) of machining locations (200, 205, 210) in each processing area (110, 115), wherein
- the track (300) comprises a number (s) of partial paths (305, 310, 315) corresponding to the number (p) of machining locations (200, 205, 210), and the steps of
- configuring the tool (100, 105) to mount respective second components (225) to respective first components (220) at each associated processing location (200, 205, 210) in its processing area (110, 115), wherein the tool (100, 105) comprises a component supply for the second components (225) and a receptacle for the component supply;
- configuring a control unit (400, 405) to move in response to a conveying movement of the component web (215) along the track (300),

(i) position (725) the tool (100, 105) at one or more of the machining locations (200, 205, 210) in its processing area (110, 115), wherein the tool has a needle or a laser, and wherein the associated receptacle is positioned in at least one of an x-direction, a y-direction and a rotational direction, and

(ii) actuate (730) the tool (100, 105) for mounting a first (220) or second (225) component at the respective machining location (200, 205, 210), so that

- in the first area (110),

(i) selected first components (220) conveyed along a first partial part (305) on the component track (215), and
(ii) selected first components (220) conveyed on the component web (215) along a second partial part (310) are machined by the tool (100) of the first area (110), and

- in the second area (115),

(i) selected first components (220) conveyed on the component web (215) along a third partial part (315), and
(ii) the first components (220) that are conveyed on the component web (215) along a second partial part (310) and are not processed in the first area (110),

are machined by the tool (105) of the second area (115).

13. The method (20) according to claim 12, wherein the second partial path (310) is adjacent to both the first partial path (305) and the third partial path (315).

14. An apparatus (10) for operating at least two tools (100, 105) in a first (110) and at least a second (115) processing area, wherein

- in each processing area (110, 115) a number (p) of machining locations (200, 205, 210) is assigned to the respective tool (100, 105), by which first components (220) carried by a component web (215) are conveyed along a track (300) through the first (110) and the at least second (115) processing area, wherein
- the total number (t) of tools in the apparatus (10) is greater than the number (p) of machining locations (200, 205, 210) in each processing area (110, 115), wherein
- the track (300) comprises a number (s) of partial paths (305, 310, 315) corresponding to the number (p) of machining locations (200, 205, 210), wherein
- the tool (100, 105) of each processing area (110, 115) is adapted to attach respective second components (225) to respective first components (220) at each associated machining location (200, 205, 210) in its processing area (110, 115), wherein the tool (100, 105) comprises a component supply for the second components (225) and a receptacle for the component supply, and wherein the apparatus (10) comprises

a control unit (400, 405) adapted to operate in response to a conveying movement of the component web (215) along the track (300), to

(i) position the tool (100, 105) and associated receptacle at one or more of the machining locations (200, 205, 210) in its processing area (110, 115), wherein the tool has a needle or laser, and wherein the positioning comprises the moving of the receptacle in at least one of an x-direction, a y-direction and a rotational direction, and
(ii) actuate the tool (100, 105) to mount a first (220) or second (225) component at the respective machining location (200, 205, 210) such that

- in the first area (110),

(i) selected first components (220) conveyed along a first partial part (305) on the component track (215), and
(ii) selected first components (220) conveyed along a second partial path (310) on the component track (215),

are machined by the tool (100) of the first area (110), and
- in the second area (115),

(i) selected first components (220) conveyed along a third partial path (315) on the component track (215), and
(ii) the first components (220) that are conveyed on the component web (215) along the second partial path (310) and are not machined in the first area (110), are machined by the tool (105) of the second area (115).

15. The apparatus (10) according to claim 14, wherein the second partial path (310) is adjacent to both the first partial path (305) and the third partial path (315).

**Revendications**

1. Un dispositif (10) pour faire fonctionner au moins deux outils (100, 105) dans une première (110) et au moins une deuxième (115) zone d'usinage, dans lequel

- dans chaque zone d'usinage (110, 115), un nombre (p) de points d'usinage (200, 205, 210) est associé à l'outil respectif (100, 105), par lesquels des premiers composants (220) portés par une voie de composants (215) sont transportés le long d'une piste (300) à travers la première (110) et au moins la deuxième (115) zone d'usinage, dans lequel
- le nombre total (t) d'outils dans le dispositif (10) est inférieur au nombre (p) de postes d'usinage (200, 205, 210) dans chaque zone d'usinage (110, 115), dans lequel
- la piste (300) comprend un nombre (s) de sous-pistes (305, 310, 315) correspondant au nombre (p) de postes d'usinage (200, 205, 210), dans lequel
- l'outil (100, 105) de chaque zone d'usinage (110, 115) est configuré pour être utilisé à chaque poste d'usinage associé (200, 205, 210) dans sa zone d'usinage (110, 115) applique des deuxièmes composants respectifs (225) à des premiers composants respectifs (220), l'outil (100) comprenant une réserve de composants pour les deuxièmes composants (225) et un logement pour la réserve de composants, et le dispositif (10) comprenant :

une unité de commande (400, 405) qui est configurée de manière à fonctionner en fonction d'un mouvement de transport de la bande de composants (215) le long de la piste (300),

(i) positionner l'outil (100, 105) et le réceptacle associé à un ou plusieurs des emplacements d'usinage (200, 205, 210) dans sa zone d'usinage (110, 115), dans lequel l'outil comprend une aiguille ou un laser, et dans lequel le positionnement comprend le déplacement du réceptacle dans au moins une direction parmi une direction x, une direction y et une direction de rotation, et
(ii) actionne l'outil (100, 105) pour monter un premier (220) ou un deuxième (225) composant à l'emplacement d'usinage respectif (200, 205, 210) de telle sorte que

- dans la première zone (110),

(i) des premiers composants sélectionnés (220) transportés sur le chemin de composants (215) le long d'une première voie partielle (305), et
(ii) des premiers composants sélectionnés (220) transportés sur le chemin de composants (215) le long d'une deuxième piste partielle (310),

sont usinés par l'outil (100) de la première zone (110), et
- dans la deuxième zone (115),

(i) des premiers composants sélectionnés (220) transportés sur le chemin de composants (215) le long d'une troisième voie partielle (315), et
(ii) les premiers composants (220) qui sont transportés sur le chemin de composants (215) le long de la deuxième piste partielle (310) et qui ne sont pas usinés dans la première zone (110) sont usinés par l'outil (105) de la deuxième zone (115).

2. le dispositif (10) selon la revendication 1, dans lequel la deuxième sous-piste (310) est adjacente à la fois à la première sous-piste (305) et à la troisième sous-piste (315).

3. Le dispositif (10) selon la revendication 1 ou 2, dans lequel la bande de composants (215) transportée le long de la piste (300) à travers la première (110) et au moins la deuxième (115) zone de traitement est transportée de manière intermittente ou continue par une fonction de transport (120).

4. Le dispositif (10) de l'une quelconque des revendications précédentes, dans lequel l'unité de commande (400, 405) de chaque zone de traitement (110, 115) est couplée à une unité de commande principale (410).

5. Le dispositif (10) de l'une quelconque des revendications précédentes, dans lequel le nombre total (t) d'outils dans le dispositif (10) et le nombre (p) de positions d'usinage (200, 205, 210) dans chaque zone d'usinage (110, 115) obéissent à la relation mathématique : $t < p \leq floor(1,5t)$.

6. Le dispositif (10) de l'une quelconque des revendications précédentes, dans lequel l'outil (105) de la première zone d'usinage (110) se déplace en fonction de l'outil (105) de la deuxième zone d'usinage (115).

7. Le dispositif (10) de l'une quelconque des revendications précédentes, dans lequel l'unité de commande (400, 405) est en outre configurée pour faire fonctionner les outils (100, 105) de telle sorte que l'outil (100) de la première zone d'usinage (110) usine b premiers composants (220) de la deuxième piste partielle (310) et que l'outil (105) de la deuxième zone d'usinage (115) usine b composants suivants premiers composants (220) de la deuxième piste partielle (310), et dans lequel b est un nombre entier.

8. Le dispositif (10) selon l'une quelconque des revendications 1 à 6, dans lequel l'unité de commande (400, 405) est en outre configurée pour actionner les outils (100, 105) de telle sorte que l'outil (100) de la première zone d'usinage (110) b usine des premiers composants (220) de la deuxième piste partielle (310) et que l'outil (105) de la deuxième zone d'usinage (115) suivante c usine des premiers composants (220) de la deuxième piste partielle (310), où b et c sont des nombres entiers, et où b≠c.

9. Le dispositif (10) de l'une quelconque des revendications précédentes, dans lequel le nombre (s) de pistes partielles (305, 310, 315) est un facteur entier du nombre (p) de postes d'usinage (200, 205, 210).

10. Le dispositif (10) de l'une quelconque des revendications précédentes, dans lequel l'unité de commande (400, 405) est en outre configurée pour recevoir des informations indiquant si le premier composant (220) transporté sur le chemin de composants (215) le long de la deuxième piste partielle (310) a été usiné ou non.

11. Le dispositif (10) selon la revendication 3 ou selon l'une quelconque des revendications 4 à 10 lorsqu'il dépend de la revendication 3, le nombre de postes d'usinage (200, 205, 210) attribués à chaque outil (100, 105) dans sa zone d'usinage (110, 105) respective dépendant du temps nécessaire à l'outil (100) pour se déplacer entre les postes d'usinage (200, 205, 210) et, le cas échéant, du transport de la bande de composants (215) à travers la zone d'usinage (110, 115).

12. Un procédé (20) pour faire fonctionner au moins deux outils (100, 105) dans une première (110) et au moins une deuxième (115) zone d'usinage, comprenant l'étape consistant à

    - l'attribution (705) à l'outil respectif, dans chaque zone d'usinage (110, 115), d'un nombre (p) de positions d'usinage (200, 205, 210) par lesquelles des premiers composants (220) portés par une bande de composants (215) sont transportés le long d'une piste (300) à travers la première (110) et au moins la deuxième (115) zone d'usinage, où

    - le nombre total (t) d'outils est inférieur au nombre (p) de positions d'usinage (200, 205, 210) dans chaque zone d'usinage (110, 115), où

    - la piste (300) comprend un nombre (s) de sous-pistes (305, 310, 315) correspondant au nombre (p) d'emplacements d'usinage (200, 205, 210), et les étapes consistant à

    - configurer l'outil (100, 105) pour monter, à chaque emplacement d'usinage associé (200, 205, 210) dans sa zone d'usinage (110, 115), respectivement des deuxièmes composants (225) sur respectivement des premiers composants (220), l'outil (100, 105) comprenant une réserve de composants pour les deuxièmes composants (225) et un logement pour la réserve de composants ;

configurer une unité de commande (400, 405) pour commander, en fonction d'un mouvement de transport de la bande de composants (215) le long de la piste (300),

    (i) positionner (725) l'outil (100, 105) à un ou plusieurs des emplacements d'usinage (200, 205, 210) dans sa zone d'usinage (110, 115), dans lequel l'outil comprend une aiguille ou un laser, et dans lequel le logement associé est positionné dans au moins une direction parmi une direction x, une direction y et une direction de rotation, et

    (ii) actionner (730) l'outil (100, 105) pour monter un premier (220) ou un deuxième (225) composant à l'emplacement d'usinage respectif (200, 205, 210), de sorte que

    - dans la première zone (110),

        (i) des premiers composants sélectionnés (220) transportés sur le chemin de composants (215) le long d'une première voie partielle (305), et

        (ii) des premiers composants sélectionnés (220) transportés sur le chemin de composants (215) le long d'une seconde piste partielle (310) sont usinés par l'outil (100) de la première zone (110), et

    - dans la deuxième zone (115),

        (i) des premiers composants sélectionnés (220) transportés sur le trajet de composants (215) le long d'un troisième trajet partiel (315), et

        (ii) les premiers composants (220) qui sont transportés sur le chemin de composants (215) le long du deuxième sous-chemin (310) et qui ne sont pas traités dans la première zone (110),

être usiné par l'outil (105) de la deuxième zone (115).

13. Le procédé (20) selon la revendication 12, dans lequel la deuxième sous-piste (310) est adjacente à la fois à la première sous-piste (305) et à la troisième sous-piste (315).

14. Un dispositif (10) pour faire fonctionner au moins deux outils (100, 105) dans une première (110) et au moins une deuxième (115) zone d'usinage, dans lequel

- dans chaque zone d'usinage (110, 115), un nombre (p) de points d'usinage (200, 205, 210) est associé à l'outil respectif (100, 105), par laquelle des premiers composants (220) portés par une bande de composants (215) sont transportés le long d'une piste (300) à travers la première (110) et au moins la deuxième (115) zone d'usinage, dans lequel

- le nombre total (t) d'outils dans le dispositif (10) est supérieur au nombre (p) de postes d'usinage (200, 205, 210) dans chaque zone d'usinage (110, 115), dans lequel

- la piste (300) comprend un nombre (s) de sous-pistes (305, 310, 315) correspondant au nombre (p) de positions d'usinage (200, 205, 210), dans lequel

- l'outil (100, 105) de chaque zone d'usinage (110, 115) est configuré pour être utilisé à chaque position d'usinage associée (200, 205, 210) dans sa zone d'usinage (110, 115) applique des deuxièmes composants respectifs (225) à des premiers composants respectifs (220), l'outil (100, 105) comprenant une réserve de composants pour les deuxièmes composants (225) et un logement pour la réserve de composants, et le dispositif (10) comprenant :

une unité de commande (400, 405) configurée pour fonctionner en fonction d'un mouvement de transport de la bande de composants (215) le long de la piste (300),

    (i) positionner l'outil (100, 105) et le réceptacle associé à un ou plusieurs des emplacements d'usinage (200, 205, 210) dans sa zone d'usinage (110, 115), dans lequel l'outil comprend une aiguille ou un laser, et dans lequel le positionnement comprend le déplacement du réceptacle dans au moins une direction parmi une direction x, une direction y et une direction de rotation, et

    (ii) actionne l'outil (100, 105) pour monter un premier (220) ou un deuxième (225) composant à l'emplacement d'usinage respectif (200, 205, 210) de telle sorte que

- dans la première zone (110),

    (i) des premiers composants sélectionnés (220) transportés sur le chemin de composants (215) le long d'une première voie partielle (305), et

    (ii) des premiers composants sélectionnés (220) transportés sur le chemin de composants (215) le long d'une deuxième piste partielle (310),

sont usinés par l'outil (100) de la première zone (110), et

- dans la deuxième zone (115),

    (i) des premiers composants sélectionnés (220) transportés sur le chemin de composants (215) le long d'une troisième voie partielle (315), et

    (ii) les premiers composants (220) qui sont transportés sur le chemin de composants (215) le long de la deuxième piste partielle (310) et qui ne sont pas usinés dans la première zone (110) sont usinés par l'outil (105) de la deuxième zone (115).

15. Le dispositif (10) selon la revendication 14, dans lequel la deuxième sous-piste (310) est adjacente à la fois à la première sous-piste (305) et à la troisième sous-piste (315).

Fig. 1

Fig. 2

Fig. 3a

Fig. 3b

Fig. 4

Fig. 5

Fig. 6

Fig. 7a

Fig. 7b

Fig. 7c

Fig. 7d

EP 4 211 519 B1

Fig. 7e

Fig. 7f

Fig. 7g

| t | 1 | 2 | 3 | 4 | 4 | 4 | 5 |
|---|---|---|---|---|---|---|---|
| p | - | 3 | 4 | 5 | 6 | 7 | 7 |
| s | - | 3 | 4 | 5 | 6 | 7 | 7 |

Siehe Fig. 7a und e

Siehe Fig.en 7b und c

Siehe Fig. 7d

Fig. 8

20

START 700

*Zuweisen* jedem Werkzeug in seinem jeweiligen Bearbeitungsbereich eine Anzahl von Bearbeitungsstellen
705

*Kennzeichnen* eines oder mehrerer der ersten Bauteile mit einem oder mehreren Indikatoren
710

*Prüfen* eines oder mehrerer der ersten Bauteile
715

*Auftragen* von Klebstoff auf eines oder mehrere der ersten Bauteile
720

*Positionieren* jedes der Werkzeuge an einer oder mehreren der Bearbeitungsstellen in seinem jeweiligen Bearbeitungsbereich
725

*Betätigen* des Werkzeugs
730

*Prüfen* der bearbeiteten Bauteile
735

ENDE 740

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10349847 B3
- WO 2017076989 A1
- DE 102011104225 B4
- JP 2003109979 A
- JP 5267451 A
- EP 0565781 B1
- DE 19822512 A1
- US 4667402 B1
- US 20080086874 A1
- EP 2764826 A1
- US 20020019074 A1
- US 2009242124 A1
- EP 0140126 A1
- US 4990051 B1
- US 2006237142 A1
- US 2007293022 A1
- US 6201306 B1
- JP 2009238881 A
- JP 2010161155 A
- JP 60097634 A
- JP 1109737 A
- JP 55070041 A
- JP 2002050670 A
- JP 9162204 A
- JP 53100765 A
- JP 2008004936 A
- WO 2007137888 A1
- WO 2000014789 A1
- EP 949662 A2
- US 2006013680 A1
- US 2016308269 A1
- DE 102011017218 A1
- EP 2491583 B1